# EUROPEAN PATENT SPECIFICATION

(11) **EP 3 716 676 B1**
(45) Date of publication and mention of the grant of the patent: **12.04.2023**
(21) Application number: 18880195.5
(22) Date of filing: 22.11.2018
(51) Int. Cl.: H04W 24/08, H04W 24/00, H04W 24/10

(54) **MINIMIZATION OF DRIVE TEST (MDT) CONFIGURATION METHOD AND DEVICE, AND MDT MEASUREMENT METHOD AND DEVICE**
VERFAHREN UND VORRICHTUNG FÜR MINIMIZATION OF DRIVE TEST (MDT)-KONFIGURATION SOWIE VERFAHREN UND VORRICHTUNG ZUR MDT-MESSUNG
PROCÉDÉ ET DISPOSITIF DE CONFIGURATION DE MINIMISATION DES ESSAIS DE CONDUITE (MDT), ET PROCÉDÉ ET DISPOSITIF DE MESURE DE MDT

(30) Priority: 22.11.2017 CN 201711175852
(43) Date of publication of application: 30.09.2020
(73) Proprietor: Vivo Mobile Communication Co., Ltd., Dongguan, Guangdong 523860 (CN)
(72) Inventor: KIMBA DIT ADAMOU, Boubacar, Dongguan Guangdong 523860 (CN); YANG, Xiaodong, Dongguan Guangdong 523860 (CN)
(74) Representative: Winter, Brandl - Partnerschaft mbB
(86) International application number: PCT/CN2018/116912
(87) International publication number: WO 2019/101125

(56) References cited:
- EP-A1- 2 763 453
- CN-A- 102 685 793
- CN-A- 102 804 850
- CN-A- 103 686 822
- CN-A- 105 764 089
- CN-A- 106 465 143
- US-A1- 2012 208 503
- US-A1- 2016 142 961
- US-A1- 2016 323 768

## Description

### TECHNICAL FIELD

The present disclosure relates to the field of wireless communication technologies, and in particular, to a method and a base station for configuring Minimization of Drive-Test (MDT), and to a method and a user equipment device for MDT measurement.

### BACKGROUND

In network optimization of a mobile communication system in related art, a drive-test method is usually used to check a network coverage quality and determine whether a system performance meets expected design requirements. That is, a professional network optimization person drives a measurement vehicle to move randomly, and a measurement terminal records events and measurement data during the movement, which are provided to the operators for being used in making network optimization decisions. As such, the drive-test operation is performed manually, which requires a lot of manpower and consumes excessive time, and puts huge burdens on the network construction made by the operators and causes high maintenance costs. On the other hand, the drive-test operation generally has to be performed outdoors, and cannot be implemented with respect to indoor environment or a particular private area. Therefore, the drive-test operation is hard to be used in the network optimization at these locations.

In a 4-th Generation (4G) Long Term Evolution (LTE) system, an evolved LTE (eLTE) system, and a 5-th Generation (5G) New Radio (NR) system, a study on the MDT is proposed. The MDT is a technology in which the communication system enables to automatically acquire and analyze a measurement report of a User Equipment (UE) containing location information, and is used for reducing the workload of the manual drive-test operation as much as possible.

The 5G NR system, in its early stage of the development, will coexist with the 4G LTE/eLTE system for a long time. Therefore, there is a need to solve the technical problem on how to configure MDT and execute MDT measurement in a heterogeneous network.

US 2016/323768 A1 relates to a method and apparatus for supporting MDT for radio access network sharing in a wireless communication system.

EP 2 763 453 A1 relates to a method for transmitting MDT related information in a mobile communication system and a radio access network.

US 2012/208503 A1 relates to centralizing MDT user involvement. US 2016/142961 A1 relates to MDT in UMTS and LTE.

### SUMMARY

The scope of the present invention is determined only by the scope of the appended claims. More precisely, inn a first aspect, the present disclosure provides a method for configuring MDT according to claim 1 and further detailed in the dependent claims referring back to this claim. A corresponding base station is provided in claim 11 and further detailed in the dependent claims referring back to this claim.

In a second aspect, the present disclosure provides a method for MDT measurement according to claim 10. A corresponding UE is provided in claim 15.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
FIG. 1 is a schematic flow chart showing a method for configuring MDT according to an embodiment of the present disclosure;
FIG. 2 is a schematic flow chart showing the method for MDT measurement according to an embodiment of the present disclosure;
FIG. 3 is a schematic structural diagram of a base station according to an embodiment of the present disclosure;
FIG. 4 is a schematic structural diagram of a UE according to an embodiment of the present disclosure;
FIG. 5 is a schematic structural diagram of another base station according to an example;
FIG. 6 is a schematic structural diagram of another UE according to an example; and
FIG. 7 is a schematic structural diagram of yet another UE according to an example.

### DETAILED DESCRIPTION

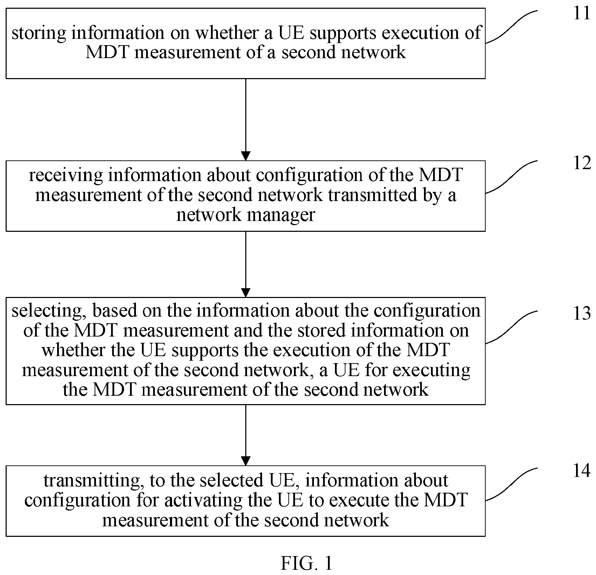

Referring to FIG. 1, an embodiment of the present disclosure provides a method for configuring MDT, which is applied to a base station of a first network. The method includes following steps.
Step 11: receiving and storing information on whether a UE supports execution of MDT measurement of a second network.
Step 12: receiving information about configuration of the MDT measurement of the second network transmitted by a network manager.
Step 13: selecting, based on the information about the configuration of the MDT measurement and the information on whether the UE supports the execution of the MDT measurement of the second network, a UE for executing the MDT measurement of the second network; and
Step 14: transmitting, to the selected UE, information about configuration for activating the UE to execute the MDT measurement of the second network.

According to an embodiment of the present disclosure, the base station of the first network is configured to receive the information on whether the UE supports the execution of the MDT measurement of the second network, receive the information about the configuration of the MDT measurement of the second network transmitted by the network manager, select a UE for executing the MDT measurement of the second network, and transmit, to the selected UE, the information about configuration for activating the UE to execute the MDT measurement of the second network. In this way, the base station of the first network can control as well the UE to execute the configuration of the MDT measurement of the second network, so that the configuration of the MDT measurement and the MDT measurement may be implemented in the heterogeneous network, thereby improving the compatibility of the MDT measurement in the heterogeneous network.

In an embodiment of the present disclosure, the first network is a LTE network or an eLTE network and the second network is a 5G NR network; or, the first network is a 5G NR network and the second network is a LTE network or an eLTE network.

In an embodiment of the present disclosure, the UE which may support the execution of the MDT measurement of the second network needs to meet the following conditions: the UE agrees to execute the MDT measurement of the second network, and the UE has the capability of executing the MDT measurement of the second network.

In some embodiments of the present disclosure, the information about the configuration for activating the UE to execute the MDT measurement of the second network may include: information for configuring the MDT measurement and indication information for activating the MDT measurement. In this case, the information for configuring the MDT measurement is used to configure a parameter about the MDT measurement of the second network of the UE, and the indication information for activating the MDT measurement is used to activate the UE to execute the MDT measurement of the second network. The UE, which receives the information for configuring the MDT measurement and the indication information for activating the MDT measurement, will execute the MDT measurement of the second network according to content of the information for configuring the MDT measurement.

In further embodiments of the present disclosure, the information about the configuration for activating the UE to execute the MDT measurement of the second network may include only information for configuring the MDT measurement. In this case, the information for configuring the MDT measurement is used to configure a parameter about the MDT measurement of the second network of the UE, and to activate the UE to execute the MDT measurement of the second network. The UE, which receives the information for configuring the MDT measurement, will execute the MDT measurement of the second network according to content of the information for configuring the MDT measurement.

When the information about the configuration for activating the UE to execute the MDT measurement of the second network includes the information for configuring the MDT measurement and the indication information for activating the MDT measurement, the step of transmitting, to the selected UE, the information about the configuration for activating the UE to execute the MDT measurement of the second network may include: transmitting, to the selected UE, the information about the configuration for activating the UE to execute the MDT measurement of the second network through only one piece of signaling; or transmitting, to the selected UE, the information about the configuration for activating the UE to execute the MDT measurement of the second network through two pieces of signaling.

In other words, the base station of the first network can transmit simultaneously, when the MDT measurement needs to be executed, the information for configuring the MDT measurement and the indication information for activating the MDT measurement to the UE through only one piece of signaling; alternatively, the base station of the first network can firstly transmit the information for configuring the MDT measurement to the UE through one piece of signaling, and then transmit the indication information for activating the MDT measurement to the UE through another piece of signaling when the MDT measurement of the second network needs to be executed.

In some embodiments of the present disclosure, the information about the configuration of the MDT measurement of the second network may include: MDT tracking report information and indication information for activating the MDT tracking report information. In this case, the MDT tracking report information is used to configure a parameter about the MDT measurement of an object for executing the MDT, and the indication information for activating the MDT tracking report information is used to activate the object for executing the MDT to execute MDT measurement. The object for executing the MDT is a base station and/or a UE.

In further embodiments of the present disclosure, the information about the configuration of the MDT measurement of the second network may include only MDT tracking report information. In this case, the MDT tracking report information is used to configure a parameter about the MDT measurement of an object for executing the MDT, and to activate the object for executing the MDT to execute MDT measurement. The object for executing the MDT is a base station and/or a UE.

In some embodiments of the present disclosure, when the information about the configuration of the MDT measurement of the second network includes the MDT tracking report information and the indication information for activating the MDT tracking report information, the step of receiving the information about the configuration of the MDT measurement of the second network transmitted by the network manager includes: receiving the MDT tracking report information and the indication information for activating the MDT tracking report information both transmitted simultaneously by the network manager through one piece of signaling.

In other words, the network manager can transmit, when the MDT measurement needs to be activated, the MDT tracking report information and the indication information for activating the MDT tracking report information to the base station of the first network at the same time.

It should be appreciated that, in some other embodiments of the present disclosure, the step of receiving the information about the configuration of the MDT measurement of the second network transmitted by the network manager includes: receiving the MDT tracking report information and the indication information for activating the MDT tracking report information transmitted separately by the network manager through respective two pieces of signaling.

In other words, the network manager can firstly transmit the MDT tracking report information to the base station of the first network through one piece of signaling, and then transmit, when the MDT measurement needs to be activated, the indication information for activating the MDT tracking report information to the base station of the first network through another piece of signaling.

In an embodiment of the present disclosure, it includes: transmitting to the selected UE the information about the configuration for activating the UE to execute the MDT measurement of the second network, when the selected UE is in a non-idle state; the non-idle state includes a Radio Resource Control (RRC) connection state, a RRC inactive state, an RRC-recovery-request initiating state, a service-request initiating state, an access-notification-area-update initiating state, and a tracking-area-update initiating state.

In other words, only when the selected UE for executing the MDT measurement of the second network is in a non-idle state, the information about the configuration for activating the UE to execute the MDT measurement of the second network is transmitted to the UE. When the selected UE for executing the MDT measurement of the second network is in an idle state, the information about the configuration for activating the UE to execute the MDT measurement of the second network is not transmitted to the UE.

In an embodiment of the present disclosure, the step of receiving, by the base station of the first network, the information on whether the UE supports the execution of the MDT measurement of the second network comprises: receiving the information on whether the UE supports the execution of the MDT measurement of the second network, wherein the information on whether the UE supports the execution of the MDT measurement of the second network is transmitted by a network node of the first network; or receiving the information on whether the UE supports the execution of the MDT measurement of the second network, wherein the information on whether the UE supports the execution of the MDT measurement of the second network is transmitted by a base station of the second network; or receiving the information on whether the UE supports the execution of the MDT measurement of the second network, wherein the information on whether the UE supports the execution of the MDT measurement of the second network is transmitted by a network node of the second network; or receiving the information on whether the UE supports the execution of the MDT measurement of the second network, wherein the information on whether the UE supports the execution of the MDT measurement of the second network is forwarded by a network node of the second network through a base station of the second network.

In an embodiment of the present disclosure, the first network is a LTE network or an eLTE network and the second network is a 5G NR network; alternatively, the first network is a 5G NR network and the second network is a LTE network or an eLTE network.

A network node of the 5G NR network may be a User Data Management (UDM), a Session Management Function (SMF) or an Access and Mobility Management Function (AMF).

A network node of the LTE network or the eLTE network may be a Home Subscriber Server (HSS), or a Mobility Management Entity (MME).

In an embodiment of the present disclosure, optionally, the information on whether the UE supports the execution of the MDT measurement of the second network is included in UE context information or UE initial context establishing request information.

In an embodiment of the present disclosure, optionally, the method further includes: after the step of receiving, by the base station of the first network, the information on whether the UE supports the execution of the MDT measurement of the second network: transmitting, by the base station of the first network, when the UE is being handed over from the base station of the first network to a target base station, information on whether the UE supports the execution of the MDT measurement of the second network which corresponds to the UE being handed over, to the target base station. In this way, the MDT measurement can be executed no matter on whichever the base station the UE is being handed over to.

In the embodiment of the present disclosure, optionally, the step of selecting, based on the information about the configuration of the MDT measurement and the information on whether the UE supports the execution of the MDT measurement of the second network, the UE for executing the MDT measurement of the second network includes: selecting, when the UE is located in the area specified by the information about the configuration of the MDT measurement of the second network and supports the execution of the MDT measurement of the second network, the UE to execute the MDT measurement of the second network; and not selecting, when the UE is not located in the area specified by the information about the configuration of the MDT measurement of the second network or does not support the execution of the MDT measurement of the second network, the UE to execute the MDT measurement of the second network.

In some embodiments of the present disclosure, the base station of the first network and the base station of the second network may share the network manager, and the step of receiving the information about the configuration of the MDT measurement of the second network transmitted by the network manager includes: receiving the information about the configuration of the MDT measurement of the second network directly transmitted by the network manager; or receiving the information about the configuration of the MDT measurement of the second network forwarded by the network manager through the network node of the first network.

In some further embodiments of the present disclosure, the base station of the first network and the base station of the second network correspond to respective independent network managers, and the step of receiving the information about the configuration of the MDT measurement of the second network transmitted by the network manager includes: receiving the information about the configuration of the MDT measurement of the second network forwarded by the network manager of the second network through the network manager of the first network, wherein the network manager of the first network receives the information about the configuration of the MDT measurement of the second network, and directly forwards the received information about the configuration of the MDT measurement of the second network to the base station of the first network; or the network manager of the first network receives the information about the configuration of the MDT measurement of the second network, and forwards the received information about the configuration of the MDT measurement of the second network to the base station of the first network through the network node of the first network; or receiving the information about the configuration of the MDT measurement of the second network forwarded by the network manager of the second network through the base station of the second network, wherein the network manager of the second network directly transmits the information about the configuration of the MDT measurement of the second network to the base station of the second network, and the base station of the second network forwards the information about the configuration of the MDT measurement of the second network to the base station of the first network; or the network manager of the second network transmits the information about the configuration of the MDT measurement of the second network to the network node of the second network, the network node of the second network forwards the information about the configuration of the MDT measurement of the second network to the base station of the second network, and the base station of the second network forwards the information about the configuration of the MDT measurement of the second network to the base station of the first network.

In an embodiment of the present disclosure, the step of transmitting to the selected UE the information about the configuration for activating the UE to execute the MDT measurement of the second network includes: transmitting to the selected UE the information about the configuration for activating the UE to execute the MDT measurement of the second network through any one or more of an RRC reconfiguration message, an RRC recovery message, an RRC suspending message, an RRC releasing message and an RRC connection establishment message.

The method for configuring the MDT according to the embodiments of the present disclosure will be described below in conjunction with specific application scenarios.

In a first embodiment, a base station of an LTE or eLTE network (a first network) is used to configure MDT measurement of a NR network (a second network).

Step 21: the base station of the LTE or eLTE network receives and stores information on whether a UE supports execution of the MDT measurement of the NR network.

In an embodiment of the present disclosure, when the UE initially accesses, if the UE supports the execution of the MDT measurement of the NR network, the information on whether the UE supports the execution of the MDT measurement of the NR network is transmitted to the base station of the LTE or eLTE network by using the following method in which: the network node HSS or MME directly transmits the information that the UE supports the execution of the MDT measurement of the NR network to the base station of the LTE or eLTE network; or the HSS transmits the information that the LTE supports the execution of the MDT measurement of the NR network to the MME, and then the MME forwards the information to the base station of the LTE or eLTE network; or the MME transmits the information that the UE supports the execution of the MDT measurement of the NR network to the base station of the LTE or eLTE network; or the base station of the NR network transmits the information that the UE supports the execution of the MDT measurement of the NR network to the base station of the LTE or eLTE network; or the network node UDM or SMF or AMF directly transmits the information that the UE supports the execution of the MDT measurement of the NR network to the base station of the NR network, and then the base station of the NR network forwards the information to the base station of the LTE or eLTE network; or the UDM transmits the information that the UE supports the execution of the MDT measurement of the NR network to the SMF, and then the SMF forwards the information to the AMF, and then the AMF forwards the information to the base station of the NR network, and then the base station of the NR network forwards the information to the base station of the LTE or eLTE network; or the SMF transmits the information that the UE supports the execution of the MDT measurement of the NR network to the AMF, and then the AMF forwards the information to the base station of the NR network, and then the base station of the NR network forwards the information to the base station of the LTE or eLTE network; or the network node UDM or SMF or AM directly transmits the information that the UE supports the execution of the MDT measurement of the NR network to the base station of the LTE or eLTE network; or the UDM transmits the information that the UE supports the execution of the MDT measurement of the NR network to the SMF, and then the SMF forwards the information to the AMF, and then the AMF forwards the information to the base station of the LTE or eLTE network; or the SMF transmits the information that the UE supports the execution of the MDT measurement of the NR network to the AMF, and then the AMF forwards the information to the base station of the LTE or eLTE network.

In an embodiment of the present disclosure, the information that the UE supports the execution of the MDT measurement of the NR network is included in UE context information or UE initial context establishing request information.

In an embodiment of the present disclosure, when the base station of the LTE or eLTE network receives the information that the UE supports the execution of the MDT measurement of the NR network, the base station will store the information that the UE supports the execution of the MDT measurement of the NR network. When the UE is being handed over from the base station of the LTE or eLTE network to a target base station, the information on whether the UE supports the execution of the MDT measurement of the NR network which corresponds to the UE being handed over is transmitted by the base station of the LTE or eLTE network to the target base station. In this way, the MDT measurement can be executed no matter on whichever the base station the UE is handed over to. The information on whether the UE supports the execution of the MDT measurement of the NR network may be included in handover request information or other signaling. Once receiving the information on whether the UE supports the execution of the MDT measurement of the NR network, the target base station will store the information on whether the UE supports the execution of the MDT measurement of the NR network.

Step 22: the base station of the LTE or eLTE network receives the MDT tracking report information of the NR network transmitted by the network manager.

The MDT tracking report information of the NR network may include at least one of the following parameters.
1). A MDT measurement type, wherein the MDT measurement type includes: a logged MDT or an immediate MDT.
2). A MDT measurement area parameter, that is, a parameter indicating which regions need to activate the MDT measurement, wherein the MDT measurement area parameter may include a network slice list, an Radio Access Network (RAN) paging area, an RAN notification area, an RAN location area, a system information area, a Core Network (CN) tracking area, or network cell information such as a cell Physical Cell Identifier (PCI).
3). A measurement list, wherein the measurement list may include:
   31). a UE measurement list, wherein the UE measurement list may include at least one of the following parameters:
      - a Power Headroom (PH);
      - a Reference Signal Receiving Power (RSRP)/Reference Signal Receiving Quality (RSRQ)/Signal to Interference Plus Noise Ratio (SINR) of an Synchronization Signal (SS) block, a Primary Synchronization Signal (PSS) and a Secondary Synchronization Signal (SSS) of the SS block, and a related Physical Broadcast Channel (PBCH);
      - measurement of the PSS and the SSS, which may include beam time index;
      - measurement of the PBCH, which may include measurement of a Demodulation Reference Signal (DMRS) and related beam information;
      - measurement of the RSRP/RSRQ/SINR of a Channel State Information-Reference Signal (CSI-RS);
      - measurement information of a Tracking Reference Signal (TRS)/a Phase-Tracking Reference Signal (PTRS);
   32). a base station measurement list, wherein the base station measurement list may include at least one of the following parameters:
      - a Received Interference Power (RIP) measurement;
      - a Data Volume (DV) measurement, including a Down Link (DL) and/or an Up Link (UL);
      - a Scheduled IP (Internet Protocol) Throughput (SIT).
4). A condition for reporting the MDT measurement, including the reporting by the UE and/or the base station.
5). An MDT measurement reporting interval.
6). A value of reported MDT measurement.
7). An event threshold, such as an RSRP threshold and/or an RSRQ threshold.
8). An MDT measurement recording interval.
9). An MDT measurement recording duration.
10). A trace reference.
11). An MDT Trace Collection Element (TCE) IP address.
12). An MDT data anonymization.
13). A measurement period, such as a DV and/or SIT measurement period.
14). A Radio Resource Management (RRM) measurement period, such as a PH measurement and/or RIP measurement period.
15). A positioning method, including a Global Positioning System (GPS), an Observed Time Difference of Arrival (OTDOA) and the like.
16). An MDT Public Land Mobile Network (PLMN) list.

In an embodiment of the present disclosure, the base station of the LTE or eLTE network is configured to determine, based on the information about the configuration of the MDT measurement of the NR network, whether the UE is in an area specified by the information about the configuration of the MDT measurement of the NR network; and determine, based on the information on whether the UE supports the execution of the MDT measurement of the NR network, whether the UE supports the execution of the MDT measurement of the NR network; select, when the UE is located in the area specified by the information about the configuration of the MDT measurement of the NR network and supports the execution of the MDT measurement of the NR network, the UE to execute the MDT measurement of the NR network; and not select, when the UE is not located in the area specified by the information about the configuration of the MDT measurement of the NR network or does not support the execution of the MDT measurement of the NR network, the UE to execute the MDT measurement of the NR network.

In an embodiment of the present disclosure, the base station of the LTE or eLTE network and the base station of the NR network may share the network manager. In this case, the step of receiving, by the base station of the LTE or eLTE network, the MDT tracking report information of the NR network transmitted by the network manager may include steps in which: the network manager directly transmits the MDT tracking report information to the base station of the LTE or eLTE network; or the network manager transmits the MDT tracking report information to the HSS, and then the HSS forwards the information to the base station of the LTE or eLTE network; or the network manager transmits the MDT tracking report information to the HSS, and then the HSS forwards the information to the MME, and then the MME forwards the information to the base station of the LTE or eLTE network.

In an embodiment of the present disclosure, the base station of the LTE or eLTE network and the base station of the NR network may correspond to respective independent network managers. In this case, the step of receiving, by the base station of the LTE or eLTE network, the MDT tracking report information of the NR network transmitted by the network manager may include: the network manager of the NR network transmits the MDT tracking report information to the network manager of the LTE or eLTE network, and then the network manager of the LTE or eLTE network transmits the information to the base station of the LTE or eLTE network; or the network manager of the LTE or eLTE network transmits the MDT tracking report information to the HSS, and then the HSS forwards the information to the base station of the eLTE network; or the network manager of the LTE or eLTE network transmits the MDT tracking report information to the HSS, and then the HSS forwards the information to the MME, and then the MME forwards the information to the base station of the LTE or eLTE network.

Step 23: the base station of the LTE or eLTE network is configured to select, based on the MDT tracking report information and the stored information on whether UE supports the execution of the MDT measurement of the NR network, the UE to execute the MDT measurement of the NR network; transmit, to the selected UE, the information about the configuration for activating the UE to execute the MDT measurement of the NR network.

In an embodiment of the present disclosure, the base station of the LTE or eLTE network may transmit, to the selected UE, the information about the configuration for activating the UE to execute the MDT measurement of the second network through any one or more of an RRC reconfiguration message, an RRC recovery message, an RRC suspending message, an RRC releasing message and an RRC connection establishment message.

In an embodiment of the present disclosure, when the UE receives, from the base station of the LTE or eLTE network, the information about the configuration for activating the UE to execute the MDT measurement of the NR network, the UE may execute the MDT measurement of the NR network based on the information about the configuration for activating the UE to execute the MDT measurement of the NR network, record the data of the MDT measurement, and report the data to the network.

The information about the configuration for activating the UE to execute the MDT measurement of the NR network includes a type of the MDT measurement, wherein the type of the MDT measurement is a logged MDT or an immediate MDT. When the type of the MDT measurement is the immediate MDT, the step of reporting, by the UE, the data of the MDT measurement of the NR network includes: reporting the data of the MDT measurement of the NR network to the base station of the LTE or eLTE network or the base station of the NR network, when the UE is in an RRC connection state or a RRC inactive state. When the type of the MDT measurement is the logged MDT, the step of reporting, by the UE, the data of the MDT measurement of the NR network includes: transmitting, by the UE to the base station of the LTE or eLTE network and/or the base station of the NR network, an indication for indicating presence of the data of the MDT measurement of the NR network, when the UE enters the RRC connection state or an RRC recovery request state; and reporting the data of the MDT measurement of the NR network to the base station of the LTE or eLTE network or the base station of the NR network, when the UE receives an indication for reporting the data of the MDT measurement of the NR network, wherein the indication for reporting the data of the MDT measurement of the NR network is transmitted by the base station of the LTE or eLTE network or the base station of the NR network according to the indication for indicating the presence of the data of the MDT measurement of the NR network.

In a second embodiment, a base station of a NR network (a first network) is used to configure MDT measurement of an LTE or eLTE network (a second network).

Step 31: the base station of the NR network receives and stores information on whether a UE supports execution of the MDT measurement of the LTE or eLTE network.

In an embodiment of the present disclosure, when the UE initially accesses, if the UE supports the execution of the MDT measurement of the LTE or eLTE network, the information on whether the UE supports the execution of the MDT measurement of the LTE or eLTE network is transmitted to the base station of the NR network by using the following method in which: the network node HSS or MME directly transmits the information that the UE supports the execution of the MDT measurement of the LTE or eLTE network to the base station of the NR network; or the HSS transmits the information that the UE supports the execution of the MDT measurement of the LTE or eLTE network to the MME, and then the MME forwards the information to the base station of the NR network; or the MME transmits the information that the UE supports the execution of the MDT measurement of the LTE or eLTE network to the base station of the NR network; or the base station of the LTE or eLTE network transmits the information that the UE supports the execution of the MDT measurement of the LTE or eLTE network to the base station of the NR network; or the network node UDM or SMF or AMF directly transmits the information that the UE supports the execution of the MDT measurement of the LTE or eLTE network to the base station of the NR network; or the UDM transmits the information that the UE supports the execution of the MDT measurement of the LTE or eLTE network to the SMF, and then the SMF forwards the information to the AMF, and then the AMF forwards the information to the base station of the LTE or eLTE network, and then the base station of the LTE or eLTE network forwards the information to the base station of the NR network; or the SMF transmits the information that the UE supports the execution of the MDT measurement of the LTE or eLTE network to the AMF, and then the AMF forwards the information to the base station of the LTE or eLTE network, and then the base station of the LTE or eLTE network forwards the information to the base station of the NR network; or the network node UDM or SMF or AM directly transmits the information that the UE supports the execution of the MDT measurement of the NR network to the base station of the NR network; or the UDM transmits the information that the UE supports the execution of the MDT measurement of the NR network to the SMF, and then the SMF forwards the information to the AMF, and then the AMF forwards the information to the base station of the NR network; or the SMF transmits the information that the UE supports the execution of the MDT measurement of the NR network to the AMF, and then the AMF forwards the information to the base station of the NR network.

In an embodiment of the present disclosure, the information that the UE supports the execution of the MDT measurement of the LTE or eLTE network is included in UE context information or UE initial context establishing request information.

In an embodiment of the present disclosure, when the base station of the NR network receives the information that the UE supports the execution of the MDT measurement of the LTE or eLTE network, the base station will store the information that the UE supports the execution of the MDT measurement of the LTE or eLTE network; when the UE is being handed over from the base station of the NR network to a target base station, the information on whether the UE supports the execution of the MDT measurement of the LTE or eLTE network which corresponds to the UE being handed over is transmitted by the base station of the NR network to the target base station. In this way, the MDT measurement can be executed no matter on whichever the base station the UE is being handed over to. The information on whether the UE supports the execution of the MDT measurement of the LTE or eLTE network may be included in handover request information or other signaling. Once receiving the information on whether the UE supports the execution of the MDT measurement of the LTE or eLTE network, the target base station will store the information on whether the UE supports the execution of the MDT measurement of the LTE or eLTE network.

Step 32: the base station of the NR network receives the MDT tracking report information of the LTE or eLTE network transmitted by the network manager.

The MDT tracking report information of the LTE or eLTE network may include at least one of the following parameters.
1). A MDT measurement type, wherein the MDT measurement type includes: a logged MDT or an immediate MDT.
2). A MDT measurement area parameter, that is, a parameter indicating which regions need to activate the MDT measurement, wherein the MDT measurement area parameter may include a network slice list, an RAN paging area, an RAN notification area, an RAN location area, a system information area, a CN tracking area, or network cell information such as a cell PCI.
3). A measurement list, wherein the measurement list may include:
   31). a UE measurement list, wherein the UE measurement list may include at least one of the following parameters:
      - a PH;
      - a RSRP/RSRQ/SINR of an SS block, a PSS and a SSS of the SS block, and a related PBCH;
      - measurement of the PSS and the SSS, which may include beam time index;
      - measurement of the PBCH, which may include measurement of a DMRS and related beam information;
      - measurement of the RSRP/RSRQ/SINR of a CSI-RS;
      - measurement information of a TRS/a PTRS;
   32). a base station measurement list, wherein the base station measurement list may include at least one of the following parameters:
      - a RIP measurement;
      - a DV measurement, including a DL and/or an UL;
      - a SIT.
4). A condition for reporting the MDT measurement, including the reporting by the UE and/or the base station.
5). An MDT measurement reporting interval.
6). A value of reported MDT measurement.
7). An event threshold, such as an RSRP threshold and/or an RSRQ threshold.
8). An MDT measurement recording interval.
9). An MDT measurement recording duration.
10). A trace reference.
11). An MDT TCE IP address.
12). An MDT data anonymization.
13). A measurement period, such as a DV and/or SIT measurement period.
14). A RRM measurement period, such as a PH measurement and/or RIP measurement period.
15). A positioning method, including a GPS, an OTDOA and the like.
16). An MDT PLMN list.

In an embodiment of the present disclosure, the base station of the NR network is configured to determine, based on the information about the configuration of the MDT measurement of the LTE or eLTE network, whether the UE is in an area specified by the information about the configuration of the MDT measurement of the LTE or eLTE network, and determine, based on the information on whether the UE supports the execution of the MDT measurement of the LTE or eLTE network, whether the UE supports the execution of the MDT measurement of the LTE or eLTE network; select, when the UE is located in the area specified by the information about the configuration of the MDT measurement of the LTE or eLTE network and supports the execution of the MDT measurement of the LTE or eLTE network, the UE to execute the MDT measurement of the LTE or eLTE network; and not select, when the UE is not located in the area specified by the information about the configuration of the MDT measurement of the LTE or eLTE network or does not support the execution of the MDT measurement of the LTE or eLTE network, the UE to execute the MDT measurement of the LTE or eLTE network.

In an embodiment of the present disclosure, the base station of the NR network and the base station of the LTE or eLTE network may share the network manager. In this case, the step of receiving, by the base station of the NR network, the MDT tracking report information of the LTE or eLTE network transmitted by the network manager may include steps in which: the network manager directly transmits the MDT tracking report information to the base station of the NR network; or the network manager transmits the MDT tracking report information to the HSS, and then the HSS forwards the information to the base station of the NR network; or the network manager transmits the MDT tracking report information to the HSS, and then the HSS forwards the information to the MME, and then the MME forwards the information to the base station of the NR network.

In an embodiment of the present disclosure, the base station of the LTE or eLTE network and the base station of the NR network may correspond to respective independent network managers. In this case, the step of receiving, by the base station of the NR network, the MDT tracking report information of the LTE or eLTE network transmitted by the network manager may include: the network manager of the LTE or eLTE network transmits the MDT tracking report information to the network manager of the NR network, and then the network manager of the NR network transmits the information to the base station of the NR network; or the network manager of the LTE or eLTE network transmits the MDT tracking report information to the HSS, and then the HSS forwards the information to the base station of the NR network; or the network manager of the LTE or eLTE network transmits the MDT tracking report information to the HSS, and then the HSS forwards the information to the MME, and then the MME forwards the information to the base station of the NR network.

Step 33: the base station of the NR network is configured to select, based on the MDT tracking report information and the stored information on whether UE supports the execution of the MDT measurement of the LTE or eLTE network, the UE to execute the MDT measurement of the LTE or eLTE network; transmit, to the selected UE, the information about the configuration for activating the UE to execute the MDT measurement of the LTE or eLTE network.

In an embodiment of the present disclosure, the base station of the NR network may transmit, to the selected UE, the information about the configuration for activating the UE to execute the MDT measurement of the LTE or eLTE network through any one or more of an RRC reconfiguration message, an RRC recovery message, an RRC suspending message, an RRC releasing message and an RRC connection establishment message.

In an embodiment of the present disclosure, when the UE receives, from the base station of the NR network, the information about the configuration for activating the UE to execute the MDT measurement of the LTE or eLTE network, the UE may execute the MDT measurement of the LTE or eLTE network based on the information about the configuration for activating the UE to execute the MDT measurement of the LTE or eLTE network, record the data of the MDT measurement, and report the data to the network.

The information about the configuration for activating the UE to execute the MDT measurement of the LTE or eLTE network includes a type of the MDT measurement, wherein the type of the MDT measurement is a logged MDT or an immediate MDT. When the type of the MDT measurement is the immediate MDT, the step of reporting, by the UE, the data of the MDT measurement of the LTE or eLTE network includes: reporting the data of the MDT measurement of the NR network to the base station of the LTE or eLTE network or the base station of the NR network, when the UE is in an RRC connection state or a RRC inactive state.

When the type of the MDT measurement is the logged MDT, the step of reporting, by the UE, the data of the MDT measurement of the LTE or eLTE network includes: transmitting, by the UE to the base station of the LTE or eLTE network and/or the base station of the NR network, an indication for indicating presence of the data of the MDT measurement of the LTE or eLTE network, when the UE enters the RRC connection state or an RRC recovery request state; and reporting the data of the MDT measurement of the LTE or eLTE network to the base station of the LTE or eLTE network or the base station of the NR network, when the UE receives an indication for reporting the data of the MDT measurement of the LTE or eLTE network, wherein the indication for reporting the data of the MDT measurement of the LTE or eLTE network is transmitted by the base station of the LTE or eLTE network or the base station of the NR network according to the indication for indicating the presence of the data of the MDT measurement of the LTE or eLTE network.

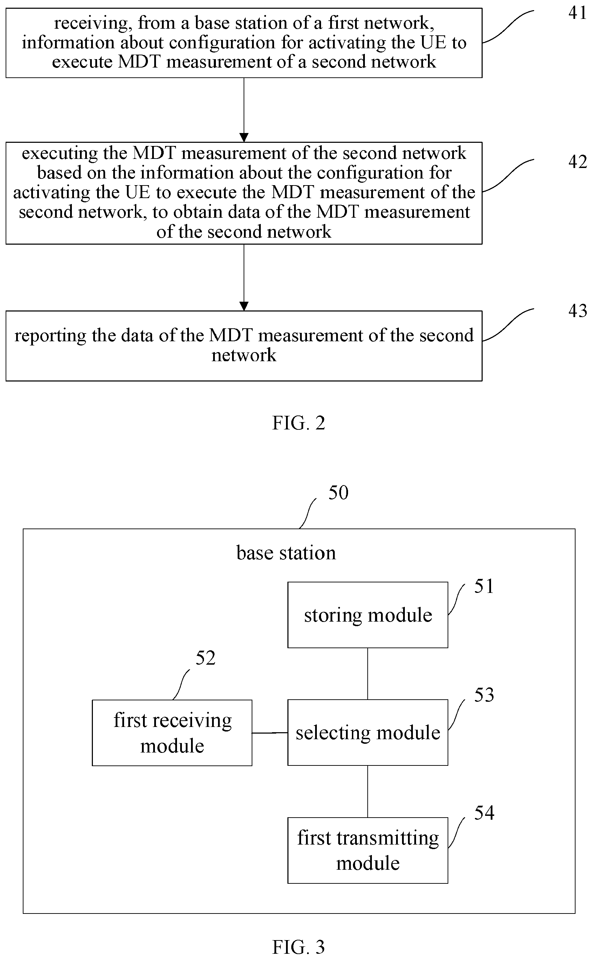

Referring to FIG. 2, an embodiment of the present disclosure further provides a method for MDT measurement, which is applied to a UE and includes following steps.

Step 41: receiving, from a base station of a first network, information about configuration for activating the LTE to execute MDT measurement of a second network.

Step 42: executing the MDT measurement of the second network based on the information about the configuration for activating the UE to execute the MDT measurement of the second network, to obtain data of the MDT measurement of the second network.

Step 43: reporting the data of the MDT measurement of the second network.

In an embodiment of the present disclosure, the UE is configured to receive, from the base station of the first network, the information about the configuration for activating the UE to execute the MDT measurement of the second network; and execute the MDT measurement of the second network. In this way, the base station of the first network can control as well the UE to execute the configuration of the MDT measurement of the second network, so that the configuration of the MDT measurement and the MDT measurement may be implemented in the heterogeneous network, thereby improving the compatibility of the MDT measurement in the heterogeneous network.

Optionally, the information about the configuration for activating the UE to execute the MDT measurement of the second network includes a type of the MDT measurement, wherein the type of the MDT measurement is a logged MDT or an immediate MDT.

When the type of the MDT measurement is the immediate MDT, the step of reporting, by the UE, the data of the MDT measurement of the second network includes: reporting the data of the MDT measurement of the second network to the base station of the first network or a base station of the second network, when the UE is in an RRC connection state or a RRC inactive state. When the type of the MDT measurement is the logged MDT, the step of reporting, by the UE, the data of the MDT measurement of the second network includes: transmitting, by the UE to the base station of the first network and/or the base station of the second network, an indication for indicating presence of the data of the MDT measurement of the second network, when the UE enters the RRC connection state or an RRC recovery request state; and reporting the data of the MDT measurement of the second network to the base station of the first network or the base station of the second network, when the UE receives an indication for reporting the data of the MDT measurement of the second network, wherein the indication for reporting the data of the MDT measurement of the second network is transmitted by the base station of the first network or the base station of the second network according to the indication for indicating the presence of the data of the MDT measurement of the second network.

Reference is made to FIG. 3. Based on the same inventive concept, an embodiment of the present disclosure further provides a base station 50, which is located in a first network and includes: a storing and receiving module 51, configured to receive and store information on whether a UE supports execution of MDT measurement of a second network; a first receiving module 52, configured to receive information about configuration of the MDT measurement of the second network transmitted by a network manager; a selecting module 53, configured to select, based on the information about the configuration of the MDT measurement and the information on whether the UE supports the execution of the MDT measurement of the second network, a UE for executing the MDT measurement of the second network; and a first transmitting module 54, configured to transmit, to the selected UE, information about configuration for activating the UE to execute the MDT measurement of the second network.

Optionally, the transmitting module is configured to transmit to the selected UE the information about the configuration for activating the UE to execute the MDT measurement of the second network, when the selected UE is in a non-idle state. The non-idle state includes a RRC connection state, a RRC inactive state, an RRC-recovery-request initiating state, a service-request initiating state, an access-notification-area-update initiating state, and a tracking-area-update initiating state.

Optionally, the base station further includes: a second receiving module, configured to receive the information on whether the UE supports the execution of the MDT measurement of the second network, wherein the information on whether the UE supports the execution of the MDT measurement of the second network is transmitted by a network node of the first network, or transmitted by a base station of the second network, or transmitted by a network node of the second network, or forwarded by a network node of the second network through a base station of the second network.

Optionally, the information on whether the UE supports the execution of the MDT measurement of the second network is included in UE context information or UE initial context establishing request information.

Optionally, the base station further includes: a second transmitting module, configured to transmit, when the UE is being handed over from the base station of the first network to a target base station, information on whether the UE supports the execution of the MDT measurement of the second network which corresponds to the UE being handed over, to the target base station.

Optionally, the selecting module is configured to: select, when the UE is located in the area specified by the information about the configuration of the MDT measurement of the second network and supports the execution of the MDT measurement of the second network, the UE to execute the MDT measurement of the second network; and not selecting, when the UE is not located in the area specified by the information about the configuration of the MDT measurement of the second network or does not support the execution of the MDT measurement of the second network, the UE to execute the MDT measurement of the second network.

Optionally, the base station of the first network and the base station of the second network share the network manager.

In this case, the first receiving module is configured to: receive the information about the configuration of the MDT measurement of the second network directly transmitted by the network manager; or receive the information about the configuration of the MDT measurement of the second network forwarded by the network manager through the network node of the first network.

Optionally, the base station of the first network and the base station of the second network correspond to respective independent network managers. The first receiving module is configured to: receive the information about the configuration of the MDT measurement of the second network forwarded by the network manager of the second network through the network manager of the first network, wherein the network manager of the first network receives the information about the configuration of the MDT measurement of the second network, and directly forwards the received information about the configuration of the MDT measurement of the second network to the base station of the first network; or the network manager of the first network receives the information about the configuration of the MDT measurement of the second network, and forwards the received information about the configuration of the MDT measurement of the second network to the base station of the first network through the network node of the first network. Alternatively, the first receiving module is configured to: receive the information about the configuration of the MDT measurement of the second network forwarded by the network manager of the second network through the base station of the second network, wherein the network manager of the second network directly transmits the information about the configuration of the MDT measurement of the second network to the base station of the second network, and the base station of the second network forwards the information about the configuration of the MDT measurement of the second network to the base station of the first network; or the network manager of the second network transmits the information about the configuration of the MDT measurement of the second network to the network node of the second network, the network node of the second network forwards the information about the configuration of the MDT measurement of the second network to the base station of the second network, and the base station of the second network forwards the information about the configuration of the MDT measurement of the second network to the base station of the first network.

Optionally, the first transmitting module is configured to transmit to the selected UE the information about the configuration for activating the UE to execute the MDT measurement of the second network through any one or more of an RRC reconfiguration message, an RRC recovery message, an RRC suspending message, an RRC releasing message and an RRC connection establishment message.

In an embodiment of the present disclosure, the base station may be a Base Transceiver Station (BTS) in Global System of Mobile communication (GSM) or Code Division Multiple Access (CDMA), or may be a Node B (NB) in Wideband Code Division Multiple Access (WCDMA), or may be an evolutional Node B (eNB or eNodeB) in the LTE, or may be a relay station or access point, or may be a base station in the future 5G network, etc, which is not limited herein.

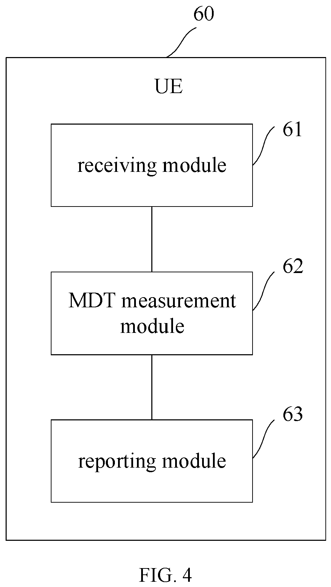

Referring to FIG. 4, an embodiment of the present disclosure further provides a UE 60. The UE 60 includes: a receiving module 61, configured to receive, from a base station of a first network, information about configuration for activating the UE to execute MDT measurement of a second network; an MDT measurement module 62, configured to execute the MDT measurement of the second network based on the information about the configuration for activating the UE to execute the MDT measurement of the second network, to obtain data of the MDT measurement of the second network; and a reporting module 63, configured to report the data of the MDT measurement of the second network.

Optionally, the information about the configuration for activating the UE to execute the MDT measurement of the second network includes a type of the MDT measurement, wherein the type of the MDT measurement is a logged MDT or an immediate MDT.

When the type of the MDT measurement is the immediate MDT, the reporting module is configured to: reporting the data of the MDT measurement of the second network to the base station of the first network or a base station of the second network, when the UE is in a RRC connection state or a RRC inactive state.

When the type of the MDT measurement is the logged MDT, the reporting module is configured to: transmit, by the UE to the base station of the first network and/or the base station of the second network, an indication for indicating presence of the data of the MDT measurement of the second network, when the UE enters the RRC connection state or an RRC recovery request state; and report the data of the MDT measurement of the second network to the base station of the first network or the base station of the second network, when the UE receives an indication for reporting the data of the MDT measurement of the second network, wherein the indication for reporting the data of the MDT measurement of the second network is transmitted by the base station of the first network or the base station of the second network according to the indication for indicating the presence of the data of the MDT measurement of the second network.

In an embodiment of the present disclosure, the UE may be a wireless terminal or a wired terminal. The wireless terminal may be a device that provides voice and/or other service data connectivity to the user, a handheld device with a wireless connection function, or another processing device connected to a wireless modem. A wireless terminal may communicate with one or more core networks via a RAN. The wireless terminal may be a mobile terminal, such as a mobile phone (or "cellular" phone) and a computer with a mobile terminal. For example, the wireless terminal may be a portable, pocketable, handheld, computer-embedded or vehicle-mounted mobile device that exchanges languages and/or data with a wireless access network, e.g., a device such as a Personal Communication Service (PCS) phone, a cordless phone, a Session Initiation Protocol (SIP) phone, a Wireless Local Loop (WLL) station, a Personal Digital Assistant (PDA) or the like. A wireless terminal may also be called as a system, a subscriber unit, a subscriber station, a mobile station, a mobile, a remote station, a remote terminal, an access terminal, a user terminal, a user agent, a user device or user equipment, which is not limited here.

An example further provides a base station including: a memory, a processor, and a computer program stored in the memory and capable of being executed by the processor, wherein the processor is configured to execute the computer program to implement steps of the method for configuring the MDT.

An example further provides a UE including: a memory, a processor, and a computer program stored in the memory and capable of being executed by the processor, wherein the processor is configured to execute the computer program to implement steps of the method for the MDT measurement.

An example further provides a computer-readable storage medium storing therein a computer program, wherein the computer program is executed by a processor, to implement steps of the method for configuring the MDT.

An example further provides a computer-readable storage medium storing therein a computer program, wherein the computer program is executed by a processor, to implement steps of the method for the MDT measurement.

The computer-readable storage medium may be, e.g., a Read-Only Memory (ROM), a Random Access Memory (RAM), a magnetic disk, or an optical disk.

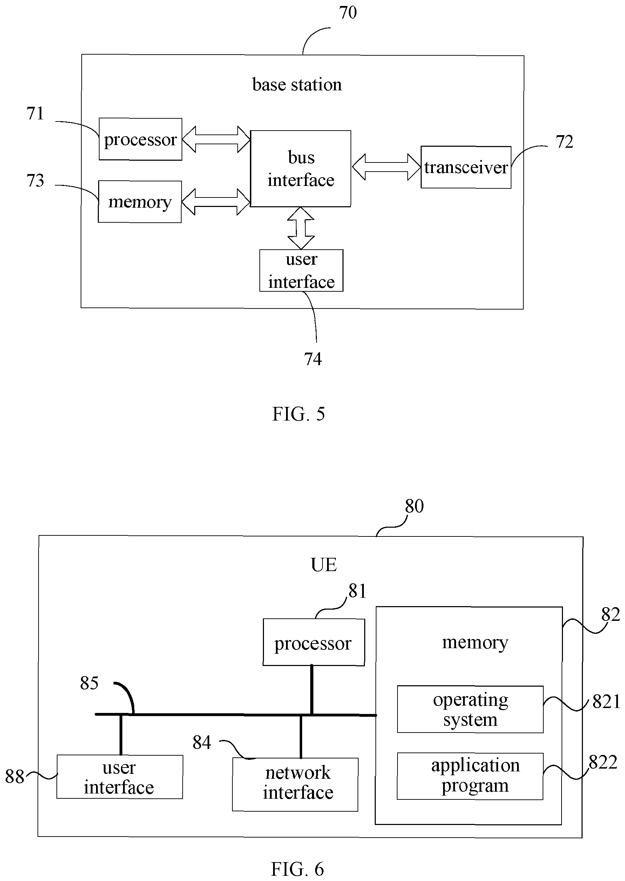

Referring to FIG. 5, an example further provides a base station 70, which is located in the first network. The base station 70 includes: a processor 71, a transceiver 72, a memory 73, a user interface 74, and a bus interface.

In an example, the base station 70 further includes a computer program stored in the memory 73 and capable of being executed by the processor 71. The processor 71 is used to execute the computer program to implement steps of: receiving information on whether a UE supports execution of MDT measurement of a second network; receiving information about configuration of the MDT measurement of the second network transmitted by a network manager; selecting, based on the information about the configuration of the MDT measurement and the information on whether the UE supports the execution of the MDT measurement of the second network, a UE for executing the MDT measurement of the second network; and transmitting, to the selected UE, information about configuration for activating the UE to execute the MDT measurement of the second network.

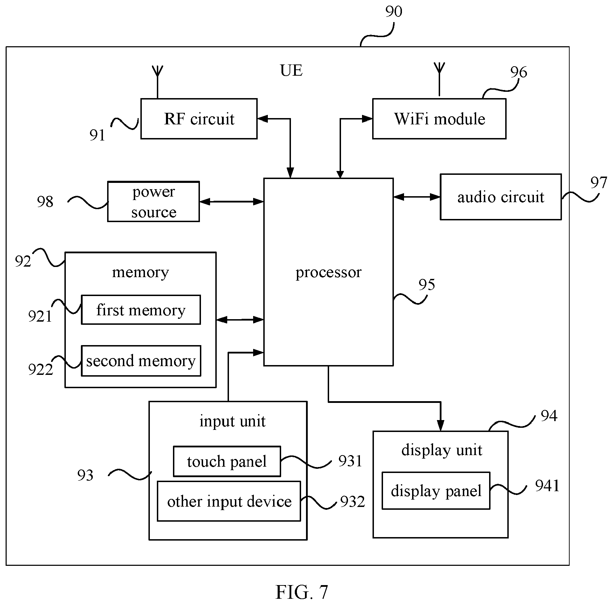

In FIG. 7, a bus architecture may include any number of interconnected buses and bridges, and connects various circuits including specifically one or more processors represented by the processor 71 and storages represented by the memory 73. The bus architecture may also connect various other circuits such as peripherals, voltage regulators and power management circuits, which is well known in the art. Therefore, a detailed description thereof is omitted herein. A bus interface are provided. The transceiver 72 may include multiple elements, i.e., including a transmitter and a transceiver, to provide units allowed for communication with various other devices on the transmission medium. For various UEs, the user interface 74 may also be an interface providing internal and external connections to required devices. The connected devices may include, but are not limited to, a keypad, a display, a speaker, a microphone, a joystick, and the like

The processor 71 is responsible for supervising the bus architecture and normal operation and the memory 73 may store the data being used by the first processor 71 during operation.

Optionally, the step of transmitting, to the selected UE, the information about the configuration for activating the UE to execute the MDT measurement of the second network includes: transmitting to the selected UE the information about the configuration for activating the UE to execute the MDT measurement of the second network, when the selected UE is in a non-idle state; the non-idle state includes a RRC connection state, a RRC inactive state, an RRC-recovery-request initiating state, a service-request initiating state, an access-notification-area-update initiating state, and a tracking-area-update initiating state.

Optionally, the step of receiving, by the base station of the first network, the information on whether the UE supports the execution of the MDT measurement of the second network comprises: receiving the information on whether the UE supports the execution of the MDT measurement of the second network, wherein the information on whether the UE supports the execution of the MDT measurement of the second network is transmitted by a network node of the first network, or transmitted by a base station of the second network, or transmitted by a network node of the second network, or forwarded by a network node of the second network through a base station of the second network.

Optionally, the information on whether the UE supports the execution of the MDT measurement of the second network is included in UE context information or UE initial context establishing request information.

Optionally, it further includes: after the step of receiving, by the base station of the first network, the information on whether the UE supports the execution of the MDT measurement of the second network: transmitting, by the base station of the first network, when the UE is being handed over from the base station of the first network to a target base station, information on whether the UE supports the execution of the MDT measurement of the second network which corresponds to the UE being handed over, to the target base station.

Optionally, the step of selecting, based on the information about the configuration of the MDT measurement and the information on whether the UE supports the execution of the MDT measurement of the second network, the UE for executing the MDT measurement of the second network includes: selecting, when the UE is located in the area specified by the information about the configuration of the MDT measurement of the second network and supports the execution of the MDT measurement of the second network, the UE to execute the MDT measurement of the second network; and not selecting, when the UE is not located in the area specified by the information about the configuration of the MDT measurement of the second network or does not support the execution of the MDT measurement of the second network, the UE to execute the MDT measurement of the second network.

Optionally, the base station of the first network and the base station of the second network share the network manager, and the step of receiving the information about the configuration of the MDT measurement of the second network transmitted by the network manager includes: receiving the information about the configuration of the MDT measurement of the second network directly transmitted by the network manager; or receiving the information about the configuration of the MDT measurement of the second network forwarded by the network manager through the network node of the first network.

Optionally, the base station of the first network and the base station of the second network correspond to respective independent network managers, and the step of receiving the information about the configuration of the MDT measurement of the second network transmitted by the network manager includes: receiving the information about the configuration of the MDT measurement of the second network forwarded by the network manager of the second network through the network manager of the first network, wherein the network manager of the first network receives the information about the configuration of the MDT measurement of the second network, and directly forwards the received information about the configuration of the MDT measurement of the second network to the base station of the first network; or the network manager of the first network receives the information about the configuration of the MDT measurement of the second network, and forwards the received information about the configuration of the MDT measurement of the second network to the base station of the first network through the network node of the first network; or receiving the information about the configuration of the MDT measurement of the second network forwarded by the network manager of the second network through the base station of the second network, wherein the network manager of the second network directly transmits the information about the configuration of the MDT measurement of the second network to the base station of the second network, and the base station of the second network forwards the information about the configuration of the MDT measurement of the second network to the base station of the first network; or the network manager of the second network transmits the information about the configuration of the MDT measurement of the second network to the network node of the second network, the network node of the second network forwards the information about the configuration of the MDT measurement of the second network to the base station of the second network, and the base station of the second network forwards the information about the configuration of the MDT measurement of the second network to the base station of the first network.

Optionally, the step of transmitting to the selected UE the information about the configuration for activating the UE to execute the MDT measurement of the second network includes: transmitting to the selected UE the information about the configuration for activating the UE to execute the MDT measurement of the second network through any one or more of an RRC reconfiguration message, an RRC recovery message, an RRC suspending message, an RRC releasing message and an RRC connection establishment message.

According to an embodiment of the present disclosure, the base station of the first network is configured to receive the information on whether the UE supports the execution of the MDT measurement of the second network, receive the information about the configuration of the MDT measurement of the second network transmitted by the network manager, select a UE for executing the MDT measurement of the second network, and transmit, to the selected UE, the information about configuration for activating the UE to execute the MDT measurement of the second network. In this way, the base station of the first network can control as well the UE to execute the configuration of the MDT measurement of the second network, so that the configuration of the MDT measurement and the MDT measurement may be implemented in the heterogeneous network, thereby improving the compatibility of the MDT measurement in the heterogeneous network.

Referring to FIG. 6, an example provides a UE 80. As shown in FIG. 6, the UE 80 includes: at least one processor 81, a memory 82, at least one network interface 84, and other user interface 83. Various components in UE 80 are coupled together by a bus system 85. It should be appreciated that the bus system 85 is used to implement connection communication between these components. In addition to a data bus, the bus system 85 further includes a power bus, a control bus, and a status signal bus. However, for clarity of description, various buses are labeled as the bus system 85 in FIG. 6.

The user interface 83 may include a display, a keyboard, or a pointing device (e.g., a mouse, a trackball, a touch pad, or a touch screen, etc.).

It should be appreciated that the memory 82 in the example may be a volatile memory or a non-volatile memory, or may include both volatile and non-volatile memories. The non-volatile memory may be a Read-Only Memory (ROM), a Programmable Read-Only Memory (PROM), an Erasable Programmable Read Only Memory (EPROM), or an Electronically Erasable Programmable Read Only Memory (EEPROM) or flash memory. The volatile memory can be a Random Access Memory (RAM) that acts as an external cache. By way of example and not limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synch Link Dynamic Random Access Memory (SLDRAM) and Direct Rambus Random Access Memory (DRRAM). The memory 82 of the systems and methods described herein is intended to include, without being limited to, these and any other suitable types of memory.

In some implementations, the memory 82 stores following elements: executable modules or data structures, or a subset thereof, or an extended set thereof: an operating system 821 and an application program 822.

The operating system 821 includes various system programs, such as a framework layer, a core library layer and a driver layer, for implementing various basic services and processing hardware-based tasks. The application program 822 includes various application programs, such as a Media Player, a Browser, for implementing various application services. A program implementing the method of the embodiments of the present disclosure may be included in the application program 822.

The UE 80 further includes a program stored in the memory 82 and capable of being executed by the processor 81. Specifically, it may be a computer program stored in the application program 822, and the processor 81 is configured to execute the program to implement following steps: receiving, from a base station of a first network, information about configuration for activating the UE to execute MDT measurement of a second network; executing the MDT measurement of the second network based on the information about the configuration for activating the UE to execute the MDT measurement of the second network, to obtain data of the MDT measurement of the second network; and reporting the data of the MDT measurement of the second network.

The method disclosed in the above embodiments of the present disclosure may be applied to the processor 81 or implemented by the processor 81. The processor 81 may be an integrated circuit chip with signal processing capabilities. In an implementation process, each step of the above method may be completed by an integrated logic circuit of hardware in the processor 81 or an instruction in a form of software. The processor 81 may be a general-purpose processor, a Digital Signal Processor (DSP), an Application Specific Integrated Circuit (ASIC), a Field Programmable Gate Array (FPGA), or another programmable logic device, a discrete gate or transistor logic device, or a discrete hardware component. Various methods, steps, and logical block diagrams disclosed in the embodiments of the present disclosure may be implemented or executed. The general-purpose processor may be a microprocessor, or the processor may be any conventional processor or the like. The steps of the method disclosed in combination with the embodiments of the present disclosure may be directly embodied as being executed by a hardware decoding processor, or being executed by a combination of hardware and software modules in a decoding processor. The software module can be located in a well-established storage medium in the art, such as random access memory, flash memory, read-only memory, programmable read-only memory or electrically erasable programmable memory, registers. The storage medium is located in the memory 82, and the processor 81 reads information in the memory 82 and implements the steps of the above method in combination with its hardware.

It should be appreciated that the embodiments described herein can be implemented by hardware, software, firmware, middleware, microcode, or a combination thereof. For hardware implementation, the processing unit can be implemented in one or more Application Specific Integrated Circuits (ASICs), Digital Signal Processor (DSPs), Digital Signal Processing Devices (DSPDs), Programmable Logic Devices (PLDs), Field Programmable Gate Arrays (FPGAs), general purpose processors, controllers, microcontrollers, microprocessors, other electronic units for performing functions described in the present application or a combination thereof.

For software implementation, techniques described herein may be implemented by modules (such as procedures, functions) that perform the functions described herein. Software codes can be stored in a memory and executed by a processor. The memory can be implemented in the processor or external to the processor.

Optionally, in another embodiment, the information about the configuration for activating the UE to execute the MDT measurement of the second network includes a type of the MDT measurement, wherein the type of the MDT measurement is a logged MDT or an immediate MDT. When the type of the MDT measurement is the immediate MDT, the step of reporting, by the UE, the data of the MDT measurement of the second network includes: reporting the data of the MDT measurement of the second network to the base station of the first network or a base station of the second network, when the UE is in an RRC connection state or a RRC inactive state. When the type of the MDT measurement is the logged MDT, the step of reporting, by the UE, the data of the MDT measurement of the second network includes: transmitting, by the UE to the base station of the first network and/or the base station of the second network, an indication for indicating presence of the data of the MDT measurement of the second network, when the UE enters the RRC connection state or an RRC recovery request state; and reporting the data of the MDT measurement of the second network to the base station of the first network or the base station of the second network, when the UE receives an indication for reporting the data of the MDT measurement of the second network, wherein the indication for reporting the data of the MDT measurement of the second network is transmitted by the base station of the first network or the base station of the second network according to the indication for indicating the presence of the data of the MDT measurement of the second network.

The UE 80 can implement the processes implemented by the UE in the foregoing embodiments. A detailed description thereof is not repeated herein.

In an example, the UE 80 is configured to receive, from the base station of the first network, the information about the configuration for activating the UE to execute the MDT measurement of the second network, and execute the MDT measurement of the second network. In this way, the base station of the first network can control as well the UE to execute the configuration of the MDT measurement of the second network, so that the configuration of the MDT measurement and the MDT measurement may be implemented in the heterogeneous network, thereby improving the compatibility of the MDT measurement in the heterogeneous network.

Referring to FIG. 7, an example further provides a UE 90. In particular, the UE 90 shown in FIG. 7 may be a mobile phone, a tablet computer, a Personal Digital Assistant, (PDA), or a vehicle-mounted computer.

The UE 90 shown in FIG. 7 includes a Radio Frequency (RF) circuit 91, a memory 92, an input unit 93, a display unit 94, a processor 95, a Wireless Fidelity (WiFi) module 96, an audio circuit 99, and a power source 98.

The input unit 93 may be configure to receive digital or character information input by the user, and generate signal input related to a user setting and a function control of the UE 90.

Specifically, in an example, the input unit 93 may include a touch panel 931. The touch panel 931, also known as a touch screen, can collect the user's touch operations on or near the touch panel 931 (such as the operation of the user on the touch panel 931 using any suitable object or accessory such as a finger, a stylus), and drive the respective connected device according to a preset program. Optionally, the touch panel 931 may include a touch detection device and a touch controller. The touch detection device is configured to detect the user's touch position, detect the signal caused by the touch operation, and transmit the signal to the touch controller. The touch controller is configured to receive touch information from the touch detection device, convert the information into a contact coordinate, transmit the contact coordinate to the processor 95, and receive and execute command from processor 95. In addition, various types such as resistive, capacitive, infrared, and surface acoustic wave may be used to implement the touch panel 931. In addition to the touch panel 931, the input unit 93 may further include other input device 932. The other input device 932 may include one or more of, but are not limited to, a physical keyboard, a function key (such as a volume control key, a switch key, etc.), a trackball, and a mouse, a joystick and the like.

The display unit 94 may be configured to display information inputted by the user or information provided to the user as well as various menu interfaces of the UE 90. The display unit 94 may include a display panel 941. Optionally, a Liquid Crystal Display (LCD) or an Organic Light-Emitting Diode (OLED), etc., can be employed to form the display panel 941.

It should be noted that the touch panel 931 can cover the display panel 941 to form a touch display screen. When the touch display screen detects the touch operation on or near the touch display screen, the touch display screen will transmit it to the processor 95 to determine the type of touch event. Then, the processor 95 provides a respective visual output on the touch display screen according to the type of touch event.

The touch display screen includes an application program interface displaying area and a common control displaying area. The arrangement of the application program interface displaying area and the common control displaying area is not limited, such as an up-and-down arrangement, or a left-and-right arrangement, as long as the two displaying areas may be distinguished from each other. The application program interface displaying area may be used to display the interface of the application program. Each interface may include interface elements such as an icon of at least one application program and/or a widget desktop control. The application program interface displaying area may also be an empty interface without any content. The common control displaying area is configured to display controls with high usage, such as a setting button, an interface number, a scroll bar, an icon of application program such as a phonebook icon, and the like.

In an example, by calling a software program and/or a module stored in the first memory 921 and/or data within the second memory 922, the computer program is executed by a processor 95 to implement following steps: receiving, from a base station of a first network, information about configuration for activating the UE to execute MDT measurement of a second network; executing the MDT measurement of the second network based on the information about the configuration for activating the UE to execute the MDT measurement of the second network, to obtain data of the MDT measurement of the second network; and reporting the data of the MDT measurement of the second network.

Optionally, in another example, the information about the configuration for activating the UE to execute the MDT measurement of the second network includes a type of the MDT measurement, wherein the type of the MDT measurement is a logged MDT or an immediate MDT. When the type of the MDT measurement is the immediate MDT, the step of reporting, by the UE, the data of the MDT measurement of the second network includes: reporting the data of the MDT measurement of the second network to the base station of the first network or a base station of the second network, when the UE is in an RRC connection state or a RRC inactive state. When the type of the MDT measurement is the logged MDT, the step of reporting, by the UE, the data of the MDT measurement of the second network includes: transmitting, by the UE to the base station of the first network and/or the base station of the second network, an indication for indicating presence of the data of the MDT measurement of the second network, when the UE enters the RRC connection state or an RRC recovery request state; and reporting the data of the MDT measurement of the second network to the base station of the first network or the base station of the second network, when the UE receives an indication for reporting the data of the MDT measurement of the second network, wherein the indication for reporting the data of the MDT measurement of the second network is transmitted by the base station of the first network or the base station of the second network according to the indication for indicating the presence of the data of the MDT measurement of the second network.

The UE 90 can implement the processes implemented by the UE in the foregoing embodiments. A detailed description thereof is not repeated herein.

In an example, the UE 90 is configured to receive, from the base station of the first network, the information about the configuration for activating the UE to execute the MDT measurement of the second network; and execute the MDT measurement of the second network. In this way, the base station of the first network can control as well the UE to execute the configuration of the MDT measurement of the second network, so that the configuration of the MDT measurement and the MDT measurement may be implemented in the heterogeneous network, thereby improving the compatibility of the MDT measurement in the heterogeneous network.

A person skilled in the art may realize that units and algorithm steps of each example described in combination with the embodiments disclosed herein may be implemented in electronic hardware or a combination of computer software and electronic hardware. Whether these functions are performed in hardware or software depends on specific applications and design constraints of the technical solution. A professional technician can use different methods to implement described functions for each specific application, but such implementation should not be considered beyond the scope of the present disclosure.

A person skilled in the art may clearly understand that, for convenience and brevity of the description, specific working process of the system, the device and the unit described above may refer to the corresponding process in the above method embodiments, which will not be repeated herein.

In the embodiments provided by the present application, it should be appreciated that the disclosed device and method may be implemented in other manners. For example, the device embodiments described above are merely illustrative. For example, division of the units is merely a logical function division. In actual implementations, there may be another division manner. For example, multiple units or components may be combined, or may be integrated into another system, or some features may be ignored or not executed. In addition, coupling or direct coupling or communication connection between the components shown or discussed may be indirect coupling or a communication connection through some interfaces, devices or units, and may be electrical, mechanical or other forms.

The units described as separate components may or may not be physically separated, and the components displayed as the units may or may not be physical units, that is, they may be located in one place or distributed to multiple network units. Some or all of the units may be selected according to actual needs to achieve objectives of the embodiments.

In addition, different functional units in different embodiments of the present disclosure may be integrated into one processing unit, or may physically exist separately, or two or more units may be integrated into one unit.

When the functions are implemented in a form of software functional units and sold or used as independent products, they may be stored in a computer-readable storage medium. Based on this understanding, the technical solution of the present disclosure essentially, or a part that contributes to the prior art, or a part of the technical solution may be embodied in a form of a software product. The computer software product is stored in a storage medium and includes instructions for causing a computer device (for example, a personal computer, a server, or a network device) to perform all or part of the steps of the method described in various embodiments of the present disclosure. The above storage medium includes various media that can store program codes, such as a Universal Serial Bus (USB) flash disk, a mobile hard disk, a ROM, a RAM, a magnetic disk, or an optical disk, and the like.

## Claims

1. A method for configuring Minimization of Drive-Test, MDT, which is performed by a base station (50) of a first network, and comprises:
receiving and storing information on whether a User Equipment, UE, supports execution of MDT measurement of a second network (11);
receiving information about configuration of the MDT measurement of the second network transmitted by a network manager (12);
selecting, based on the information about the configuration of the MDT measurement and the information on whether the UE supports the execution of the MDT measurement of the second network, a UE for executing the MDT measurement of the second network (13); and
transmitting, to the selected UE, information about configuration for activating the UE to execute the MDT measurement of the second network (14),
the method **characterized in that**:
the first network is a Long Term Evolution, LTE, network or an evolved LTE, eLTE, network and the second network is a fifth Generation, 5G, New Radio, NR, network; or the first network is the 5G NR network and the second network is the LTE network or the eLTE network.

2. The method according to claim 1, wherein transmitting, to the selected UE, the information about configuration for activating the UE to execute the MDT measurement of the second network (14) comprises:
transmitting to the selected UE the information about the configuration for activating the UE to execute the MDT measurement of the second network, when the selected UE is in a Radio Resource Control, RRC, connection state, a RRC inactive state, a RRC-recovery-request initiating state, a service-request initiating state, an access-notification-area-update initiating state, or a tracking-area-update initiating state.

3. The method according to claim 1, wherein receiving, by the base station (50) of the first network, the information on whether the UE supports the execution of the MDT measurement of the second network comprises:
receiving the information on whether the UE supports the execution of the MDT measurement of the second network, wherein the information on whether the UE supports the execution of the MDT measurement of the second network is transmitted by a network node of the first network, or transmitted by a base station of the second network, or transmitted by a network node of the second network, or forwarded by a network node of the second network through a base station of the second network.

4. The method according to claim 3, wherein the information on whether the UE supports the execution of the MDT measurement of the second network is comprised in UE context information or UE initial context establishing request information.

5. The method according to claim 1, further comprising: after receiving, by the base station (50) of the first network, the information on whether the UE supports the execution of the MDT measurement of the second network,
transmitting, by the base station (50) of the first network, when the UE is being handed over from the base station (50) of the first network to a target base station (50), information on whether the UE supports the execution of the MDT measurement of the second network which corresponds to the UE being handed over, to the target base station (50).

6. The method according to claim 1, wherein selecting, based on the information about the configuration of the MDT measurement and the information on whether the UE supports the execution of the MDT measurement of the second network, the UE for executing the MDT measurement of the second network comprises:
selecting, when the UE is located in the area specified by the information about the configuration of the MDT measurement of the second network and supports the execution of the MDT measurement of the second network, the UE to execute the MDT measurement of the second network; and
not selecting, when the UE is not located in the area specified by the information about the configuration of the MDT measurement of the second network or does not support the execution of the MDT measurement of the second network, the UE to execute the MDT measurement of the second network.

7. The method according to claim 1, wherein the base station (50) of the first network and the base station of the second network share the network manager, and receiving the information about the configuration of the MDT measurement of the second network transmitted by the network manager comprises:
receiving the information about the configuration of the MDT measurement of the second network directly transmitted by the network manager; or
receiving the information about the configuration of the MDT measurement of the second network forwarded by the network manager through the network node of the first network.

8. The method according to claim 1, wherein the base station (50) of the first network and the base station of the second network correspond to respective independent network managers, and receiving the information about the configuration of the MDT measurement of the second network transmitted by the network manager comprises:
receiving the information about the configuration of the MDT measurement of the second network forwarded by the network manager of the second network through the network manager of the first network; or
receiving the information about the configuration of the MDT measurement of the second network forwarded by the network manager of the second network through the base station of the second network.

9. The method according to claim 7 or 8, wherein transmitting to the selected UE the information about the configuration for activating the UE to execute the MDT measurement of the second network comprises:
transmitting to the selected UE the information about the configuration for activating the UE to execute the MDT measurement of the second network through any one or more of an RRC reconfiguration message, an RRC recovery message, an RRC suspending message, an RRC releasing message and an RRC connection establishment message.

10. A method for Minimization of Drive Test, MDT measurement, which is performed by a User Equipment, UE and comprises:
receiving, from a base station (50) of a first network, information about configuration for activating the UE to execute MDT measurement of a second network (41);
executing the MDT measurement of the second network based on the information about the configuration for activating the UE to execute the MDT measurement of the second network, to obtain data of the MDT measurement of the second network (42); and
reporting the data of the MDT measurement of the second network (43),
wherein the information about the configuration for activating the UE to execute the MDT measurement of the second network comprises a type of the MDT measurement, wherein the type of the MDT measurement is a logged MDT or an immediate MDT,
wherein when the type of the MDT measurement is the immediate MDT, reporting, by the UE, the data of the MDT measurement of the second network comprises:
reporting the data of the MDT measurement of the second network to the base station (50) of the first network or a base station of the second network, when the UE is in a RRC connection state or a RRC inactive state; and
when the type of the MDT measurement is the logged MDT, reporting, by the UE, the data of the MDT measurement of the second network comprises:
transmitting, by the UE to the base station (50) of the first network and/or the base station of the second network, an indication for indicating presence of the data of the MDT measurement of the second network, when the UE enters the RRC connection state or an RRC recovery request state;
reporting the data of the MDT measurement of the second network to the base station (50) of the first network or the base station of the second network, when the UE receives an indication for reporting the data of the MDT measurement of the second network, wherein the indication for reporting the data of the MDT measurement of the second network is transmitted by the base station (50) of the first network or the base station of the second network according to the indication for indicating the presence of the data of the MDT measurement of the second network, the method **characterized in that**: the first network is a Long Term Evolution, LTE, network or an evolved LTE, eLTE, network and the second network is a fifth Generation, 5G, New Radio, NR, network; or the first network is the 5G NR network and the second network is the LTE network or the eLTE network.

11. A base station (50), which is located in a first network, and comprises:
a storing and receiving module (51), configured to receive and store information on whether a User Equipment, UE supports execution of Minimization of Drive Test, MDT measurement of a second network;
a first receiving module (52), configured to receive information about configuration of the MDT measurement of the second network transmitted by a network manager;
a selecting module (53), configured to select, based on the information about the configuration of the MDT measurement and the information on whether the UE supports the execution of the MDT measurement of the second network, a UE for executing the MDT measurement of the second network; and
a first transmitting module (54), configured to transmit, to the selected UE, information about configuration for activating the UE to execute the MDT measurement of the second network,
the base station **characterized in that**:
the first network is a Long Term Evolution, LTE, network or an evolved LTE, eLTE, network and the second network is a fifth Generation, 5G, New Radio, NR, network; or the first network is the 5G NR network and the second network is the LTE network or the eLTE network.

12. The base station (50) according to claim 11, wherein,
the transmitting module (54) is configured to, when the selected UE is in a RRC connection state, a RRC inactive state, a RRC-recovery-request initiating state, a service-request initiating state, an access-notification-area-update initiating state, or a tracking-area-update initiating state, transmit to the selected UE the information about the configuration for activating the UE to execute the MDT measurement of the second network.

13. The base station (50) according to claim 11, further comprising:
a second receiving module, configured to receive the information on whether the UE supports the execution of the MDT measurement of the second network, wherein the information on whether the UE supports the execution of the MDT measurement of the second network is transmitted by a network node of the first network, or transmitted by a base station of the second network, or transmitted by a network node of the second network, or forwarded by a network node of the second network through a base station of the second network.

14. The base station (50) according to claim 11, wherein the selecting module (53) is further configured to:
when the UE is located in the area specified by the information about the configuration of the MDT measurement of the second network and supports the execution of the MDT measurement of the second network, select the UE to execute the MDT measurement of the second network; and
when the UE is not located in the area specified by the information about the configuration of the MDT measurement of the second network or does not support the execution of the MDT measurement of the second network, not select the UE to execute the MDT measurement of the second network.

15. A User Equipment, UE, comprising:
a receiving module (61), configured to receive, from a base station (50) of a first network, information about configuration for activating the UE to execute Minimization of Drive Test, MDT measurement of a second network;
an MDT measurement module (62), configured to execute the MDT measurement of the second network based on the information about the configuration for activating the UE to execute the MDT measurement of the second network, to obtain data of the MDT measurement of the second network; and
a reporting module (63), configured to report the data of the MDT measurement of the second network,
wherein the information about the configuration for activating the UE to execute the MDT measurement of the second network comprises a type of the MDT measurement, wherein the type of the MDT measurement is a logged MDT or an immediate MDT,
wherein when the type of the MDT measurement is the immediate MDT, the reporting module (63) is configured to:
report the data of the MDT measurement of the second network to the base station (50) of the first network or a base station of the second network, when the UE is in a RRC connection state or a RRC inactive state; and
when the type of the MDT measurement is the logged MDT, the reporting module (63) is configured to:
transmit, by the UE to the base station (50) of the first network and/or the base station of the second network, an indication for indicating presence of the data of the MDT measurement of the second network, when the UE enters the RRC connection state or an RRC recovery request state; and
report the data of the MDT measurement of the second network to the base station (50) of the first network or the base station of the second network, when the UE receives an indication for reporting the data of the MDT measurement of the second network, wherein the indication for reporting the data of the MDT measurement of the second network is transmitted by the base station (50) of the first network or the base station of the second network according to the indication for indicating the presence of the data of the MDT measurement of the second network, the UE **characterized in that**: the first network is a Long Term Evolution, LTE, network or an evolved LTE, eLTE, network and the second network is a fifth Generation, 5G, New Radio, NR, network; or the first network is the 5G NR network and the second network is the LTE network or the eLTE network.

## Patentansprüche

1. Verfahren zum Konfigurieren eines Minimization-of-Drive-Tests, MDTs, das von einer Basisstation (50) eines ersten Netzes durchgeführt wird, und Folgendes aufweist:
Empfangen und Speichern von Informationen darüber, ob ein Benutzergerät, UE, eine Ausführung einer MDT-Messung eines zweiten Netzes unterstützt (11);
Empfangen von Informationen über eine Konfiguration der MDT-Messung des zweiten Netzes, die von einem Netzmanager übertragen werden (12);
Auswählen, basierend auf den Informationen über die Konfiguration der MDT-Messung und den Informationen darüber, ob das UE die Ausführung der MDT-Messung des zweiten Netzes unterstützt, eines UE zum Ausführen der MDT-Messung des zweiten Netzes (13); und
Übertragen von Informationen über eine Konfiguration zum Aktivieren des UE zur Ausführung der MDT-Messung des zweiten Netzes an das ausgewählte UE (14),
wobei das Verfahren **dadurch gekennzeichnet ist, dass**:
das erste Netz ein Long-Term-Evolution-Netz, LTE-Netz, oder ein Evolved-LTE-Netz, eLTE-Netz, ist und das zweite Netz ein Fifth-Generation-New-Radio-Netz, 5G-NR-Netz, ist; oder das erste Netz das 5G-NR-Netz ist und das zweite Netz das LTE-Netz oder das eLTE-Netz ist.

2. Verfahren nach Anspruch 1, wobei das Übertragen von den Informationen über Konfiguration zum Aktivieren des UE zur Ausführung der MDT-Messung des zweiten Netzes an das ausgewählte UE (14) aufweist:
Übertragen der Informationen über die Konfiguration zum Aktivieren des UE zum Ausführen der MDT-Messung des zweiten Netzes an das ausgewählte UE, wenn sich das ausgewählte UE in einem Radio-Resource-Control-Verbindungszustand, RRC-Verbindungszustand, einem RRC-Inaktiv-Zustand, einem RRC-Recovery-Request-Initiierungszustand, einem Service-Request-Initiierungszustand, einem Access-Notification-Area-Update-Initiierungszustand oder einem Tracking-Area-Update-Initiierungszustand befindet.

3. Verfahren nach Anspruch 1, wobei das Empfangen, durch die Basisstation (50) des ersten Netzes, der Informationen darüber, ob das UE die Ausführung der MDT-Messung des zweiten Netzes unterstützt, Folgendes aufweist:
Empfangen der Informationen darüber, ob das UE die Ausführung der MDT-Messung des zweiten Netzes unterstützt, wobei die Informationen darüber, ob das UE die Ausführung der MDT-Messung des zweiten Netzes unterstützt, von einem Netzknoten des ersten Netzes übertragen wird, oder von einer Basisstation des zweiten Netzes übertragen wird, oder von einem Netzknoten des zweiten Netzes übertragen wird, oder von einem Netzknoten des zweiten Netzes über eine Basisstation des zweiten Netzes weitergeleitet wird.

4. Verfahren nach Anspruch 3, wobei die Informationen darüber, ob das UE die Ausführung der MDT-Messung des zweiten Netzes unterstützt, in UE-Kontextinformationen oder UE-Anfangskontext-Herstellungs-Anforderungsinformationen enthalten ist.

5. Verfahren nach Anspruch 1, ferner aufweisend: nach dem Empfangen, durch die Basisstation (50) des ersten Netzes, der Informationen darüber, ob das UE die Ausführung der MDT-Messung des zweiten Netzes unterstützt,
Übertragen, durch die Basisstation (50) des ersten Netzes, wenn das UE von der Basisstation (50) des ersten Netzes an eine Ziel-Basisstation (50) übergeben wird, der Informationen darüber, ob das UE die Ausführung der MDT-Messung des zweiten Netzes unterstützt, das dem UE entspricht, das übergeben wird, an die Ziel-Basisstation (50).

6. Verfahren nach Anspruch 1, wobei das Auswählen, basierend auf den Informationen über die Konfiguration der MDT-Messung und den Informationen darüber, ob das UE die Ausführung der MDT-Messung des zweiten Netzes unterstützt, des UE zum Ausführen der MDT-Messung des zweiten Netzes Folgendes aufweist:
Auswählen des UE zur Ausführung der MDT-Messung des zweiten Netzes, wenn sich das UE in dem durch die Informationen über die Konfiguration der MDT-Messung des zweiten Netzes spezifizierten Bereich befindet und die Ausführung der MDT-Messung des zweiten Netzes unterstützt; und
Nicht-Auswahlen des UE zur Ausführung der MDT-Messung des zweiten Netzes, wenn sich das UE nicht in dem durch die Informationen über die Konfiguration der MDT-Messung des zweiten Netzes spezifizierten Bereich befindet oder die Ausführung der MDT-Messung des zweiten Netzes nicht unterstützt.

7. Verfahren nach Anspruch 1, wobei die Basisstation (50) des ersten Netzes und die Basisstation des zweiten Netzes sich den Netzmanager teilen und das Empfangen der Informationen über die Konfiguration der MDT-Messung des zweiten Netzes, die vom Netzmanager übertragen werden, Folgendes aufweist:
Empfangen der Informationen über die Konfiguration der MDT-Messung des zweiten Netzes, die direkt vom Netzmanager übertragen werden; oder
Empfangen der Informationen über die Konfiguration der MDT-Messung des zweiten Netzes, die vom Netzmanager über den Netzknoten des ersten Netzes weitergeleitet werden.

8. Verfahren nach Anspruch 1, wobei die Basisstation (50) des ersten Netzes und die Basisstation des zweiten Netzes jeweils unabhängigen Netzwerkmanagern entsprechen, und das Empfangen der Informationen über die Konfiguration der MDT-Messung des zweiten Netzes, die von dem Netzwerkmanager übertragen werden, Folgendes aufweist:
Empfangen der Informationen über die Konfiguration der MDT-Messung des zweiten Netzes, die von dem Netzmanager des zweiten Netzes über den Netzmanager des ersten Netzes weitergeleitet werden; oder
Empfangen der Informationen über die Konfiguration der MDT-Messung des zweiten Netzes, die vom Netzmanager des zweiten Netzes über die Basisstation des zweiten Netzes weitergeleitet werden.

9. Verfahren nach Anspruch 7 oder 8, wobei das Übertragen der Informationen über die Konfiguration zum Aktivieren des UE zur Ausführung der MDT-Messung des zweiten Netzes an das ausgewählte UE Folgendes aufweist:
Übertragen der Informationen über die Konfiguration zum Aktivieren des UE zur Ausführung der MDT-Messung des zweiten Netzes an das ausgewählte UE durch Folgendes: eine RRC-Rekonfigurationsnachricht, und/oder eine RRC-Wiederherstellungsnachricht, und/oder eine RRC-Suspending-Nachricht, und/oder eine RRC-Freigabenachricht und/oder eine RRC-Verbindungsherstellungsnachricht.

10. Verfahren zur Messung eines Minimization-of-Drive-Tests, MDTs, das von einem Benutzergerät, UE, durchgeführt wird, und Folgendes aufweist:
Empfangen, von einer Basisstation (50) eines ersten Netzes, von Informationen über eine Konfiguration zum Aktivieren des UE zur Ausführung einer MDT-Messung eines zweiten Netzes (41);
Ausführen der MDT-Messung des zweiten Netzes basierend auf den Informationen über die Konfiguration zum Aktivieren des UE zur Ausführung der MDT-Messung des zweiten Netzes, um Daten der MDT-Messung des zweiten Netzes zu erhalten (42); und
Berichten der Daten der MDT-Messung des zweiten Netzes (43),
wobei die Informationen über die Konfiguration zum Aktivieren des UE zur Ausführung der MDT-Messung des zweiten Netzes einen Typ der MDT-Messung aufweisen, wobei der Typ der MDT-Messung eine protokollierte MDT oder eine unmittelbare MDT ist,
wobei, wenn der Typ der MDT-Messung die unmittelbare MDT ist, das Berichten der Daten der MDT-Messung des zweiten Netzes durch das UE Folgendes aufweist:
Berichten der Daten der MDT-Messung des zweiten Netzes an die Basisstation (50) des ersten Netzes oder eine Basisstation des zweiten Netzes, wenn das UE sich in einem RRC-Verbindungszustand oder einem RRC-Inaktiv-Zustand befindet; und
wenn der Typ der MDT-Messung die protokollierte MDT ist, das Berichten der Daten der MDT-Messung des zweiten Netzes durch das UE Folgendes aufweist:
Übertragen einer Anzeige zum Anzeigen eines Vorhandenseins der Daten der MDT-Messung des zweiten Netzes durch das UE an die Basisstation (50) des ersten Netzes und/oder die Basisstation des zweiten Netzes, wenn das UE in den RRC-Verbindungszustand oder einen RRC-Wiederherstellungsanforderungszustand eintritt;
Berichten der Daten der MDT-Messung des zweiten Netzes an die Basisstation (50) des ersten Netzes oder die Basisstation des zweiten Netzes, wenn das UE eine Anzeige zum Berichten der Daten der MDT-Messung des zweiten Netzes empfängt, wobei die Anzeige zum Berichten der Daten der MDT-Messung des zweiten Netzes von der Basisstation (50) des ersten Netzes oder der Basisstation des zweiten Netzes gemäß der Anzeige zum Anzeigen des Vorhandenseins der Daten der MDT-Messung des zweiten Netzes übertragen wird,
wobei das Verfahren **dadurch gekennzeichnet ist, dass** das erste Netz ein Long-Term-Evolution-Netz, LTE-Netz, oder ein Evolved-LTE-Netz, eLTE-Netz, ist und das zweite Netz ein Fifth-Generation-New-Radio-Netz, 5G-NR-Netz, ist; oder das erste Netz das 5G-NR-Netz ist und das zweite Netz das LTE-Netz oder das eLTE-Netz ist.

11. Basisstation (50), die sich in einem ersten Netz befindet, und Folgendes aufweist:
ein Speicher- und Empfangsmodul (51), das dazu konfiguriert ist, Informationen darüber zu empfangen und speichern, ob ein Benutzergerät, UE, eine Ausführung einer Minimization-of-Drive-Test-Messung, MDT-Messung, eines zweiten Netzes unterstützt;
ein erstes Empfangsmodul (52), das dazu konfiguriert ist, Informationen über eine Konfiguration der MDT-Messung des zweiten Netzes zu empfangen, die von einem Netzmanager übertragen werden;
ein Auswahlmodul (53), das dazu konfiguriert ist, basierend auf den Informationen über die Konfiguration der MDT-Messung und den Informationen darüber, ob das UE die Ausführung der MDT-Messung des zweiten Netzes unterstützt, ein UE zum Ausführen der MDT-Messung des zweiten Netzes auszuwählen; und
ein erstes Übertragungsmodul (54), das dazu konfiguriert ist, Informationen über eine Konfiguration zum Aktivieren des UE zur Ausführung der MDT-Messung des zweiten Netzes an das ausgewählte UE zu übertragen,
wobei die Basisstation **dadurch gekennzeichnet ist, dass**:
das erste Netz ein Long-Term-Evolution-Netz, LTE-Netz, oder ein Evolved-LTE-Netz, eLTE-Netz, ist und das zweite Netz ein Fifth-Generation-New-Radio-Netz, 5G-NR-Netz, ist; oder das erste Netz das 5G-NR-Netz ist und das zweite Netz das LTE-Netz oder das eLTE-Netz ist.

12. Basisstation (50) nach Anspruch 11, wobei,
das Übertragungsmodul (54) dazu konfiguriert ist, wenn sich das ausgewählte UE in einem RRC-Verbindungszustand, einem RRC-Inaktiv-Zustand, einem RRC-Recovery-Request-Initiierungszustand, einem Service-Request-Initiierungszustand, einem Access-Notification-Area-Update-Initiierungszustand oder einem Tracking-Area-Update-Initiierungszustand befindet, die Informationen über die Konfiguration zum Aktivieren des UE zur Ausführung der MDT-Messung des zweiten Netzes an das ausgewählte UE zu übertragen.

13. Basisstation (50) nach Anspruch 11, ferner mit
einem zweiten Empfangsmodul, das dazu konfiguriert ist, die Informationen darüber zu empfangen, ob das UE die Ausführung der MDT-Messung des zweiten Netzes unterstützt, wobei die Informationen darüber, ob das UE die Ausführung der MDT-Messung des zweiten Netzes unterstützt, von einem Netzknoten des ersten Netzes übertragen wird oder von einer Basisstation des zweiten Netzes übertragen wird oder von einem Netzknoten des zweiten Netzes übertragen wird oder von einem Netzknoten des zweiten Netzes über eine Basisstation des zweiten Netzes weitergeleitet wird.

14. Basisstation (50) nach Anspruch 11, wobei das Auswahlmodul (53) ferner dazu konfiguriert ist:
wenn sich das UE in dem durch die Informationen über die Konfiguration der MDT-Messung des zweiten Netzwerks spezifizierten Bereich befindet und die Ausführung der MDT-Messung des zweiten Netzes unterstützt, das UE zur Ausführung der MDT-Messung des zweiten Netzes auszuwählen; und
wenn sich das UE nicht in dem durch die Informationen über die Konfiguration der MDT-Messung des zweiten Netzes spezifizierten Bereich befindet oder die Ausführung der MDT-Messung des zweiten Netzes nicht unterstützt, das UE Ausführung der MDT-Messung des zweiten Netzes nicht auszuwählen.

15. Benutzergerät, UE, mit
einem Empfangsmodul (61), das dazu konfiguriert ist, von einer Basisstation (50) eines ersten Netzes Informationen über eine Konfiguration zum Aktivieren des UE zur Ausführung einer Minimization-of-Drive-Test-Messung, MDT-Messung, eines zweiten Netzes zu empfangen;
einem MDT-Messmodul (62), das dazu konfiguriert ist, die MDT-Messung des zweiten Netzes basierend auf den Informationen über die Konfiguration zum Aktivieren des UE zur Ausführung der MDT-Messung des zweiten Netzes auszuführen, um Daten der MDT-Messung des zweiten Netzes zu erhalten; und
einem Berichtsmodul (63), das dazu konfiguriert ist, die Daten der MDT-Messung des zweiten Netzes zu berichten,
wobei die Informationen über die Konfiguration zum Aktivieren des UE zur Ausführung der MDT-Messung des zweiten Netzes einen Typ der MDT-Messung aufweisen, wobei der Typ der MDT-Messung eine protokollierte MDT oder eine unmittelbare MDT ist,
wobei, wenn der Typ der MDT-Messung die unmittelbare MDT ist, das Berichtsmodul (63) dazu konfiguriert ist:
die Daten der MDT-Messung des zweiten Netzes an die Basisstation (50) des ersten Netzes oder eine Basisstation des zweiten Netzes zu berichten, wenn sich das UE in einem RRC-Verbindungszustand oder einem RRC-Inaktiv-Zustand befindet; und
wenn der Typ der MDT-Messung die protokollierte MDT ist, das Berichtsmodul (63) dazu konfiguriert ist:
durch das UE an die Basisstation (50) des ersten Netzes und/oder die Basisstation des zweiten Netzes eine Anzeige zum Anzeigen eines Vorhandenseins der Daten der MDT-Messung des zweiten Netzes zu übertragen, wenn das UE in den RRC-Verbindungszustand oder einen RRC-Wiederherstellungsanforderungszustand eintritt; und
die Daten der MDT-Messung des zweiten Netzes an die Basisstation (50) des ersten Netzes oder die Basisstation des zweiten Netzes zu berichten, wenn das UE eine Anzeige zum Berichten der Daten der MDT-Messung des zweiten Netzes empfängt, wobei die Anzeige zum Berichten der Daten der MDT-Messung des zweiten Netzes von der Basisstation (50) des ersten Netzes oder der Basisstation des zweiten Netzes gemäß der Anzeige zum Anzeigen des Vorhandenseins der Daten der MDT-Messung des zweiten Netzes übertragen wird,
wobei das UE **dadurch gekennzeichnet ist, dass** das erste Netz ein Long-Term-Evolution-Netz, LTE-Netz, oder ein Evolved-LTE-Netz, eLTE-Netz, ist und das zweite Netz ein Fifth-Generation-New-Radio-Netz, 5G-NR-Netz, ist; oder das erste Netz das 5G-NR-Netz ist und das zweite Netz das LTE-Netz oder das eLTE-Netz ist.

## Revendications

1. Procédé de configuration de minimisation d'essai de couverture mobile, MDT, qui est réalisé par une station de base (50) d'un premier réseau, et comprend :
la réception et le stockage d'informations relatives à si un équipement utilisateur, UE, prend en charge ou non une exécution de mesure MDT d'un second réseau (11) ;
la réception d'informations relatives à une configuration de la mesure MDT du second réseau transmises par un gestionnaire de réseau (12) ;
la sélection, sur la base des informations relatives à la configuration de la mesure MDT et des informations relatives à si l'UE prend en charge ou non l'exécution de la mesure MDT du second réseau, d'un UE pour exécuter la mesure MDT du second réseau (13) ; et
la transmission, à l'UE sélectionné, d'informations relatives à une configuration pour activer l'UE pour exécuter la mesure MDT du second réseau (14),
le procédé étant **caractérisé en ce que** :
le premier réseau est un réseau d'évolution à long terme, LTE, ou un réseau LTE évolué, eLTE, et le second réseau est un réseau nouvelle radio, NR, de cinquième génération, 5G ; ou le premier réseau est le réseau 5G NR et le second réseau est le réseau LTE ou le réseau eLTE.

2. Procédé selon la revendication 1, dans lequel la transmission, à l'UE sélectionné, des informations relatives à une configuration pour activer l'UE pour exécuter la mesure MDT du second réseau (14) comprend :
la transmission, à l'UE sélectionné, des informations relatives à la configuration pour activer l'UE pour exécuter la mesure MDT du second réseau, lorsque l'UE sélectionné est dans un état de connexion de commande de ressources radio, RRC, un état RRC inactif, un état d'initiation de demande de récupération RRC, un état d'initiation de demande de service, un état d'initiation de mise à jour de zone de notification d'accès ou un état d'initiation de mise à jour de zone de suivi.

3. Procédé selon la revendication 1, dans lequel la réception, par la station de base (50) du premier réseau, des informations relatives à si l'UE prend en charge ou non l'exécution de la mesure MDT du second réseau comprend :
la réception des informations relatives à si l'UE prend en charge ou non l'exécution de la mesure MDT du second réseau, dans lequel les informations relatives à si l'UE prend en charge ou non l'exécution de la mesure MDT du second réseau sont transmises par un noeud de réseau du premier réseau, ou sont transmises par une station de base du second réseau, ou sont transmises par un noeud de réseau du second réseau, ou sont transférées par un noeud de réseau du second réseau par l'intermédiaire d'une station de base du second réseau.

4. Procédé selon la revendication 3, dans lequel les informations relatives à si l'UE prend en charge ou non l'exécution de la mesure MDT du second réseau sont comprises dans des informations de contexte d'UE ou dans des informations de demande d'établissement de contexte initial d'UE.

5. Procédé selon la revendication 1, comprenant en outre : après la réception, par la station de base (50) du premier réseau, des informations relatives à si l'UE prend en charge ou non l'exécution de la mesure MDT du second réseau,
la transmission, par la station de base (50) du premier réseau, lorsque l'UE subit un transfert intercellulaire depuis la station de base (50) du premier réseau à une station de base (50) cible, d'informations relatives à si l'UE prend en charge ou non l'exécution de la mesure MDT du second réseau correspondant au transfert intercellulaire de l'UE, à la station de base (50) cible.

6. Procédé selon la revendication 1, dans lequel la sélection, sur la base des informations relatives à la configuration de la mesure MDT et des informations relatives à si l'UE prend en charge ou non l'exécution de la mesure MDT du second réseau, de l'UE pour exécuter la mesure MDT du second réseau comprend :
la sélection, lorsque l'UE est situé dans la zone spécifiée par les informations relatives à la configuration de la mesure MDT du second réseau et prend en charge l'exécution de la mesure MDT du second réseau, de l'UE pour exécuter la mesure MDT du second réseau ; et
la non-sélection, lorsque l'UE n'est pas situé dans la zone spécifiée par les informations relatives à la configuration de la mesure MDT du second réseau ou ne prend pas en charge l'exécution de la mesure MDT du second réseau, de l'UE pour exécuter la mesure MDT du second réseau.

7. Procédé selon la revendication 1, dans lequel la station de base (50) du premier réseau et la station de base du second réseau partagent le gestionnaire de réseau, et la réception des informations relatives à la configuration de la mesure MDT du second réseau transmises par le gestionnaire de réseau comprend :
la réception des informations relatives à la configuration de la mesure MDT du second réseau directement transmises par le gestionnaire de réseau ; ou
la réception des informations relatives à la configuration de la mesure MDT du second réseau transférées par le gestionnaire de réseau par l'intermédiaire du noeud de réseau du premier réseau.

8. Procédé selon la revendication 1, dans lequel la station de base (50) du premier réseau et la station de base du second réseau correspondent à des gestionnaires de réseau indépendants respectifs, et la réception des informations relatives à la configuration de la mesure MDT du second réseau transmises par le gestionnaire de réseau comprend :
la réception des informations relatives à la configuration de la mesure MDT du second réseau transférées par le gestionnaire de réseau du second réseau par l'intermédiaire du gestionnaire de réseau du premier réseau ; ou
la réception des informations relatives à la configuration de la mesure MDT du second réseau transférées par le gestionnaire de réseau du second réseau par l'intermédiaire de la station de base du second réseau.

9. Procédé selon la revendication 7 ou 8, dans lequel la transmission, à l'UE sélectionné, des informations relatives à la configuration pour activer l'UE pour exécuter la mesure MDT du second réseau comprend :
la transmission, à l'UE sélectionné, des informations relatives à la configuration pour activer l'UE pour exécuter la mesure MDT du second réseau par l'intermédiaire de l'un quelconque ou de plusieurs parmi un message de reconfiguration RRC, un message de récupération RRC, un message de suspension RRC, un message de libération RRC et un message d'établissement de connexion RRC.

10. Procédé de mesure de minimisation d'essai de couverture mobile, MDT, qui est réalisé par un équipement utilisateur, UE, et comprend :
la réception, depuis une station de base (50) d'un premier réseau, d'informations relatives à une configuration pour activer l'UE pour exécuter une mesure MDT d'un second réseau (41) ;
l'exécution de la mesure MDT du second réseau sur la base des informations relatives à la configuration pour activer l'UE pour exécuter la mesure MDT du second réseau, pour obtenir des données de la mesure MDT du second réseau (42) ; et
le rapport des données de la mesure MDT du second réseau (43),
dans lequel les informations relatives à la configuration pour activer l'UE pour exécuter la mesure MDT du second réseau comprennent un type de la mesure MDT, dans lequel le type de la mesure MDT est une MOT journalisée ou une MDT immédiate,
dans lequel, lorsque le type de la mesure MDT est la MDT immédiate, le rapport, par l'UE, des données de la mesure MDT du second réseau comprend :
le rapport des données de la mesure MDT du second réseau à la station de base (50) du premier réseau ou à une station de base du second réseau, lorsque l'UE est dans un état de connexion RRC ou dans un état RRC inactif ; et
lorsque le type de la mesure MDT est la MDT journalisée, le rapport, par l'UE, des données de la mesure MDT du second réseau comprend :
la transmission, par l'UE à la station de base (50) du premier réseau et/ou à la station de base du second réseau, d'une indication pour indiquer une présence des données de la mesure MDT du second réseau, lorsque l'UE entre dans l'état de connexion RRC ou dans un état de demande de récupération RRC ;
le rapport des données de la mesure MDT du second réseau à la station de base (50) du premier réseau ou à la station de base du second réseau, lorsque l'UE reçoit une indication pour rapporter les données de la mesure MDT du second réseau, dans lequel l'indication pour rapporter les données de la mesure MDT du second réseau est transmise par la station de base (50) du premier réseau ou par la station de base du second réseau en fonction de l'indication pour indiquer la présence des données de la mesure MDT du second réseau, le procédé étant **caractérisé en ce que** : le premier réseau est un réseau d'évolution à long terme, LTE, ou un réseau LTE évolué, eLTE, et le second réseau est un réseau nouvelle radio, NR, de cinquième génération, 5G ; ou le premier réseau est le réseau 5G NR et le second réseau est le réseau LTE ou le réseau eLTE.

11. Station de base (50), qui est située dans un premier réseau, et comprend :
un module de stockage et de réception (51), configuré pour recevoir et stocker des informations relatives à si un équipement utilisateur, UE, prend en charge ou non une exécution de mesure de minimisation d'essai de couverture mobile, MDT, d'un second réseau ;
un premier module de réception (52), configuré pour recevoir des informations relatives à une configuration de la mesure MDT du second réseau transmises par un gestionnaire de réseau ;
un module de sélection (53), configuré pour sélectionner, sur la base des informations relatives à la configuration de la mesure MDT et des informations relatives à si l'UE prend en charge ou non l'exécution de la mesure MDT du second réseau, un UE pour exécuter la mesure MDT du second réseau ; et
un premier module de transmission (54), configuré pour transmettre, à l'UE sélectionné, des informations relatives à une configuration pour activer l'UE pour exécuter la mesure MDT du second réseau,
la station de base étant **caractérisée en ce que** :
le premier réseau est un réseau d'évolution à long terme, LTE, ou un réseau LTE évolué, eLTE, et le second réseau est un réseau nouvelle radio, NR, de cinquième génération, 5G ; ou le premier réseau est le réseau 5G NR et le second réseau est le réseau LTE ou le réseau eLTE.

12. Station de base (50) selon la revendication 11, dans laquelle,
le module de transmission (54) est configuré pour, lorsque l'UE sélectionné est dans un état de connexion RRC, un état RRC inactif, un état d'initiation de demande de récupération RRC, un état d'initiation de demande de service, un état d'initiation de mise à jour de zone de notification d'accès ou un état d'initiation de mise à jour de zone de suivi, transmettre, à l'UE sélectionné, les informations relatives à la configuration pour activer l'UE pour exécuter la mesure MDT du second réseau.

13. Station de base (50) selon la revendication 11, comprenant en outre :
un second module de réception, configuré pour recevoir les informations relatives à si l'UE prend en charge ou non l'exécution de la mesure MDT du second réseau, dans laquelle les informations relatives à si l'UE prend en charge ou non l'exécution de la mesure MDT du second réseau sont transmises par un noeud de réseau du premier réseau, ou sont transmises par une station de base du second réseau, ou sont transmises par un noeud de réseau du second réseau, ou sont transférées par un noeud de réseau du second réseau par l'intermédiaire d'une station de base du second réseau.

14. Station de base (50) selon la revendication 11, dans laquelle le module de sélection (53) est en outre configuré pour :
lorsque l'UE est situé dans la zone spécifiée par les informations relatives à la configuration de la mesure MDT du second réseau et prend en charge l'exécution de la mesure MDT du second réseau, sélectionner l'UE pour exécuter la mesure MDT du second réseau ; et
lorsque l'UE n'est pas situé dans la zone spécifiée par les informations relatives à la configuration de la mesure MDT du second réseau ou ne prend pas en charge l'exécution de la mesure MDT du second réseau, ne pas sélectionner l'UE pour exécuter la mesure MDT du second réseau.

15. Équipement utilisateur, UE, comprenant :
un module de réception (61), configuré pour recevoir, depuis une station de base (50) d'un premier réseau, des informations relatives à une configuration pour activer l'UE pour exécuter une mesure de minimisation d'essai de couverture mobile, MDT, d'un second réseau ;
un module de mesure MDT (62), configuré pour exécuter la mesure MDT du second réseau sur la base des informations relatives à la configuration pour activer l'UE pour exécuter la mesure MDT du second réseau, pour obtenir des données de la mesure MDT du second réseau ; et
un module de rapport (63), configuré pour rapporter les données de la mesure MDT du second réseau,
dans lequel les informations relatives à la configuration pour activer l'UE pour exécuter la mesure MDT du second réseau comprennent un type de la mesure MDT, dans lequel le type de la mesure MDT est une MOT journalisée ou une MDT immédiate,
dans lequel, lorsque le type de la mesure MDT est la MDT immédiate, le module de rapport (63) est configuré pour :
rapporter les données de la mesure MDT du second réseau à la station de base (50) du premier réseau ou à une station de base du second réseau, lorsque l'UE est dans un état de connexion RRC ou dans un état RRC inactif ; et
dans lequel, lorsque le type de la mesure MDT est la MDT journalisée, le module de rapport (63) est configuré pour :
transmettre, par l'UE à la station de base (50) du premier réseau et/ou à la station de base du second réseau, une indication pour indiquer une présence des données de la mesure MDT du second réseau, lorsque l'UE entre dans l'état de connexion RRC ou dans un état de demande de récupération RRC ; et
rapporter les données de la mesure MDT du second réseau à la station de base (50) du premier réseau ou à la station de base du second réseau, lorsque l'UE reçoit une indication pour rapporter les données de la mesure MDT du second réseau, dans lequel l'indication pour rapporter les données de la mesure MDT du second réseau est transmise par la station de base (50) du premier réseau ou par la station de base du second réseau en fonction de l'indication pour indiquer la présence des données de la mesure MDT du second réseau, l'UE étant **caractérisé en ce que** : le premier réseau est un réseau d'évolution à long terme, LTE, ou un réseau LTE évolué, eLTE, et le second réseau est un réseau nouvelle radio, NR, de cinquième génération, 5G ; ou le premier réseau est le réseau 5G NR et le second réseau est le réseau LTE ou le réseau eLTE.
